(19) **Europäisches Patentamt European Patent Office Office européen des brevets**

(11) **EP 4 305 430 B1**

(12) **FASCICULE DE BREVET EUROPEEN**

(45) Date de publication et mention de la délivrance du brevet:
**29.01.2025 Bulletin 2025/05**

(21) Numéro de dépôt: **22713706.4**

(22) Date de dépôt: **09.03.2022**

(51) Classification Internationale des Brevets (IPC):
**G01P 3/48** *(2006.01)* **G01P 3/50** *(2006.01)*

(52) Classification Coopérative des Brevets (CPC):
**G01P 3/48; G01P 3/50**

(86) Numéro de dépôt international:
**PCT/FR2022/050421**

(87) Numéro de publication internationale:
**WO 2022/189754 (15.09.2022 Gazette 2022/37)**

(54) **PROCÉDÉ, DISPOSITIF ET PROGRAMME D'ORDINATEUR D'ESTIMATION D'UNE VITESSE D'UN VÉHICULE À ROUE**

VERFAHREN, VORRICHTUNG UND COMPUTERPROGRAMM ZUR SCHÄTZUNG EINER GESCHWINDIGKEIT EINES RADFAHRZEUGS

METHOD, DEVICE AND COMPUTER PROGRAM FOR ESTIMATING A SPEED OF A WHEELED VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.03.2021 FR 2102407**

(43) Date de publication de la demande:
**17.01.2024 Bulletin 2024/03**

(73) Titulaires:
- **SAFRAN**
  **75015 Paris (FR)**
- **Institut National de Recherche en Informatique et en Automatique**
  **78150 Rocquencourt (FR)**

(72) Inventeurs:
- **ABBOUD, Dany**
  **77550 Moissy-Cramayel (FR)**
- **BARRAU, Axel**
  **77550 Moissy-Cramayel (FR)**
- **LEIBER, Maxime**
  **77550 Moissy-Cramayel (FR)**
- **MARNISSI, Yosra**
  **77550 Moissy-Cramayel (FR)**

(74) Mandataire: **Regimbeau**
  **20, rue de Chazelles**
  **75847 Paris Cedex 17 (FR)**

(56) Documents cités:
**US-A1- 2014 278 206 US-A1- 2019 236 859**

- **KARLSSON RICKARD ET AL: "The Future of Automotive Localization Algorithms: Available, reliable, and scalable localization: Anywhere and anytime", vol. 34, no. 2, 1 March 2017 (2017-03-01), US, pages 60 - 69, XP055855637, ISSN: 1053-5888, Retrieved from the Internet <URL:https://ieeexplore.ieee. org/ielx7/79/7870726/07872535.pdf?tp=& arnumber=7872535&isnumber=7870726& ref=aHR0cHM6Ly9pZWVleHBsb3JlLmllZ WUub3JnL2RvY3VtZW50Lzc4NzI1MzU=> [retrieved on 20211028], DOI: 10.1109/ MSP.2016.2637418**

**Description**

L'invention concerne un procédé, un dispositif et un programme d'ordinateur pour l'estimation d'une vitesse de déplacement d'un véhicule à roue de roulement sur le sol.

Le domaine d'application de l'invention est notamment les véhicules automobiles terrestres roulants, les aéronefs à train d'atterrissage ayant des roues roulant sur le sol au décollage ou à l'atterrissage.

La vitesse instantanée d'un véhicule est une donnée très importante dans le domaine de la navigation inertielle. Dans l'état de la technique, le signal de vitesse est généralement mesuré par un capteur supplémentaire de vitesse (odomètre) placé sur la roue du véhicule. L'installation d'un tel capteur présente un coût et n'est pas toujours envisageable dans certaines applications, particulièrement en aéronautique et en navigation terrestre militaire.

Le document US 2019/236859 concerne un procédé pour déterminer l'usage d'un véhicule à partir d'un signal de vibration acquis par un capteur fixé au véhicule, en déterminant une caractéristique spectrale du signal de vibration, caractérisant des fréquences d'un ou plusieurs pics d'énergie.

Le document US 2014/278206 concerne un procédé pour déterminer la trajectoire d'un véhicule, utilisant des mesures d'accélération et l'acquisition de caractéristiques environnementales acoustiques du véhicule, qui sont acquises par le smartphone et qui fournissent une information sur la vitesse du véhicule.

L'invention cherche à se dispenser d'un capteur direct de vitesse tel qu'un odomètre ou d'un capteur de position.

Un objectif de l'invention est de développer un procédé, un dispositif et un programme d'ordinateur pour l'estimation d'une vitesse de déplacement d'un véhicule à roue de roulement sur le sol, qui soient capables d'estimer avec précision la vitesse instantanée d'un véhicule à roue à partir d'au moins un capteur inertiel ou vibratoire (pouvant être par exemple un accéléromètre ou gyroscope ou microphone), en se dispensant d'un capteur direct de vitesse tel qu'un odomètre ou d'un capteur de position.

Dans l'état de la technique, des tentatives ont été faites pour surpasser le problème d'absence d'un capteur direct de vitesse en exploitant les informations présentes dans les signaux inertiels, comme par exemple dans le document « The Future of Automotive Localization Algorithms: Available, reliable, and scalable localization: Anywhere and anytime » de Rickard Karlsson et Fredrik Gustafsson, 2017. Selon ce document, l'estimation de la vitesse instantanée à partir d'un signal inertiel est calculée en sélectionnant à chaque instant la fréquence la plus énergétique d'un spectrogramme. Ce type d'approche peut être efficacement applicable dans certaines applications simples où le bruit est faible, mais pas dans le domaine d'application mentionné ci-dessus, où le rapport bruit/signal est souvent très fort. Le procédé décrit par ce document de Rickard Karlsson et Fredrik Gustafsson n'est pas robuste au bruit environnemental tel que la combustion d'un moteur et nécessite un spectre dans lequel les pics sont facilement identifiables, ce qui n'est pas possible en présence d'un moteur à combustion. De plus, le spectre du signal inertiel ou vibratoire est riche en harmoniques, et ces derniers subissent des fuites d'énergie considérables ce qui rend l'identification des pics par des transformées de Fourrier délicate. La grande majorité des systèmes de navigation inertielle de l'état de la technique ne sont pas utilisables dans un bruit environnemental prépondérant.

Dans certaines applications, notamment les applications aéronautiques et les véhicules terrestres militaires, où le nombre de capteurs est très restreint, l'installation d'un capteur de position est très difficile, voire impossible en aéronautique. La présence d'un signal de vitesse instantanée est de grande importance pour un système de navigation afin d'estimer la position d'un porteur de manière très précise. Pour cela, il y a un besoin de mesurer cette vitesse instantanée sans avoir besoin d'ajouter une instrumentation matérielle sur les roues du véhicule.

L'invention vise à obtenir un procédé, un dispositif et un programme d'ordinateur pour l'estimation d'une vitesse de déplacement d'un véhicule à roue de roulement sur le sol, qui pallient les inconvénients mentionnés ci-dessus et atteignent les objectifs mentionnés ci-dessus.

A cet effet, un premier objet de l'invention est un procédé d'estimation d'une vitesse de déplacement d'un véhicule ayant au moins une roue de roulement sur le sol, caractérisé en ce que

> on mesure un signal inertiel ou vibratoire à partir d'au moins un capteur inertiel ou vibratoire du véhicule,
> on calcule par au moins un calculateur une pluralité de spectres du signal sur une pluralité de fenêtres temporelles successives définies par rapport à des instants successifs, la pluralité des spectres formant au moins un spectrogramme en fonction des instants successifs,
> on filtre le spectrogramme par au moins un filtre d'atténuation de bruit et/ou d'extraction de caractéristiques déterministes, pour obtenir au moins un spectrogramme filtré du signal sur les instants successifs,
> on estime par le calculateur une trajectoire de fréquence, représentative de la vitesse de la roue du véhicule dans le spectrogramme filtré sur les instants successifs, par le fait que : on estime par le calculateur une probabilité d'observation de la trajectoire de fréquence à partir d'une amplitude calculée du spectrogramme filtré pour chaque instant, on estime par le calculateur une loi a posteriori d'observation de la trajectoire de fréquence comme étant proportionnelle au produit d'une probabilité de transition prescrite de la trajectoire de fréquence et de la probabilité d'observation de la trajectoire de fréquence, on estime par le calculateur la trajectoire de fréquence pour les instants successifs à partir de la loi a posteriori d'observation de la trajectoire de fréquence,
on estime par le calculateur la vitesse de déplacement de la roue du véhicule pour les instants successifs à partir de la trajectoire de fréquence, ayant été estimée.

L'invention propose ainsi une méthode d'estimation du signal inertiel ou vibratoire, qui est robuste au bruit et qui utilise l'information de fréquence présente dans le signal (inertiel ou vibratoire) mesuré, et une méthodologie basée sur une approche probabiliste spécifiquement dédiée. L'invention, à la différence de l'état de la technique, permet de s'affranchir du bruit environnemental et d'extraire un signal de vitesse du véhicule sans utiliser d'odomètre et permet ainsi l'exploitation de la donnée dans des cas réels. Elle s'exprime en fonction de l'amplitude en chaque point du plan temps-fréquence et d'une loi de transition permettant de favoriser la continuité, la direction et la régularité de la trajectoire tout en exploitant la cinématique du système comme les harmoniques. Un signal inertiel est toujours présent dans le cas où un système de navigation du véhicule est présent. Dans le cas du capteur de vibrations, la fréquence des vibrations émises par les roues du véhicule est proportionnelle à la vitesse du véhicule (il suffit de multiplier par le périmètre de la roue).

Suivant un mode de réalisation de l'invention, l'on détermine par le calculateur un support de valeurs de fréquence, on estime par le calculateur la trajectoire de fréquence comme étant pour chaque instant dans le support la valeur de fréquence, qui maximise la loi a posteriori d'observation de la trajectoire de fréquence jusqu'à cet instant.

Suivant un autre mode de réalisation de l'invention, l'on détermine par le calculateur un support de valeurs de fréquence, on estime pour chaque instant par le calculateur la fréquence comme étant un barycentre de la loi a posteriori d'observation de la fréquence, prise en les valeurs de fréquence du support et affectée de ces valeurs de fréquence.

Suivant un mode de réalisation de l'invention, l'on détermine par le calculateur un support $\Omega$ de valeurs de fréquence, l'on estime par le calculateur la probabilité d'observation sachant une trajectoire comme dépendant de l'amplitude calculée du spectrogramme filtré et normalisé pour chaque instant.

Suivant un mode de réalisation de l'invention, l'on estime par le calculateur la probabilité $p_{Z_t|\xi_t}$ d'observation selon l'équation suivante : $p_{Z_t|\xi_t=f_t}(z_t) = |S(f_t, t)|.1_{[f_{min}(t),f_{max}(t)]}(f_t)$ où $|S(f_t, t)|$ est l'amplitude calculée du spectrogramme $S(f_t, t)$ filtré pour chaque instant t, $f_{min}(t)$ est une trajectoire minimale de fréquence ayant été mesurée, $f_{max}(t)$ est une trajectoire maximale de fréquence ayant été mesurée, $f_{min}(t)$ et $f_{max}(t)$ sont telles que $f_{min}(t) \leq \xi_t \leq f_{max}(t)$, $1_{[f_{min}(t),f_{max}(t)]}(f_t)$ est une fonction prenant la valeur 1 pour $f_t$ entre $f_{min}(t)$ et $f_{max}(t)$ et prenant la valeur 0 pour $f_t$ en-dessous de $f_{min}(t)$ ou au-dessus de $f_{max}(t)$.

Suivant un mode de réalisation de l'invention, l'on estime par le calculateur la probabilité $p_{Z_t|\xi_t}$ d'observation

$$p_{Z_t|\xi_t=f_t}(z_t) = \prod_{j|\ j.f_t<\frac{F_s}{2}} \frac{1}{c_t} |S(j.f_t, t)|\ 1_{[f_{min}(t),f_{max}(t)]}(f_t)$$

selon l'équation suivante : où $j$ est un entier ou réel positif, vérifiant $j.f_t < \frac{F_s}{2}$ où $f_t$ désigne les fréquences de chaque spectrogramme filtré $S(f_t, t)$ à l'instant t, et où $F_s$ est une fréquence de seuil, ayant été prédéterminée en fonction du spectrogramme filtré $S(f_t, t)$.

Suivant un mode de réalisation de l'invention, l'on détermine par le calculateur un support de valeurs de fréquence, l'on estime par le calculateur la probabilité $p_{Z_t|\xi_t}$ d'observation de la trajectoire $\xi_t$ de fréquence selon les équations suivantes :

$$p_{Z_t|\xi_t=f_t}(z_t) = \prod_{f\in\Omega} p_{Z_t[f]|\xi_t=f_t}(z_t[f])$$

pour $\xi_t = f_t \in \Omega$ avec $p_{Z_t[f]|\xi_t=f_t}(z_t[f_t] = 1)$ dépendant de l'amplitude calculée du spectrogramme filtré pour chaque instant t, $p_{Z_t[f]|\xi_t=f_t}(z_t[f] = 1) = 0$ pour $f \neq f_t$ où $Z_t$ est un vecteur binaire d'observation ayant une taille $N_s$ prescrite pour l'instant $t \in \{1, \ldots, N_s\}$ tel que $Z_t[f] = 1$ si $\bar{f}_t = f$ sinon $Z_t[f] = 0$ pour $f \neq \bar{f}_t$.

Suivant un mode de réalisation de l'invention,

$$p_{Z_t[f_t]|\xi_t=f_t}(z_t[f_t] = 1) = \frac{1}{c_t}|S(f_t, t)|.1_{[f_{min}(t),f_{max}(t)]}(f_t)$$

où $|S(f_t, t)|$ est l'amplitude calculée du spectrogramme $S(f_t, t)$ filtré pour chaque instant t,

$$c_t = \max_{f\in[f_{min}(t),f_{max}(t)]} z_t[f]$$

$f_{min}(t)$ est une trajectoire minimale de fréquence ayant été mesurée,
$f_{max}(t)$ est une trajectoire maximale de fréquence ayant été mesurée,
$f_{min}(t)$ et $f_{max}(t)$ sont telles que $f_{min}(t) \leq \xi_t \leq f_{max}(t)$,

$1_{[f_{min}(t), f_{max}(t)]}$ $(f_t)$ est une fonction prenant la valeur 1 pour $f_t$ entre $f_{min}(t)$ et $f_{max}(t)$ et prenant la valeur 0 pour $f_t$ endessous de $f_{min}(t)$ ou au-dessus de $f_{max}(t)$.

Suivant un mode de réalisation de l'invention, l'on détermine par le calculateur un support de valeurs de fréquence, on prescrit par le calculateur la probabilité $p_\xi(f_1, \ldots , f_{N_s})$ de transition de la trajectoire $\xi_t$ de fréquence pour l'instant $N_s$ en partant de la probabilité initiale donnée $p_{\xi_1}$ de l'instant 1, pour $t \in \{1, \ldots, N_s\}$ et pour chaque fréquence $f_t \in \Omega$

selon l'équation suivante : $$p_\xi(f_1, \ldots, f_{N_s}) = p_{\xi_1}(f_1) \prod_{t=1}^{N_s-1} p_{\xi_{t+1}|\xi_t=f_t}(f_{t+1})$$

où $N_s$ est un nombre entier prescrit, supérieur ou égal à deux, d'instants prescrits successifs t,
où $p_{\xi_{t+1}|\xi_t=f_t}(f_{t+1})$ est la probabilité de transition de la fréquence $\xi_t$ de la trajectoire de fréquence de l'instant présent t à la fréquence $\xi_{t+1}$ de la trajectoire de fréquence de l'instant suivant t+1.

Suivant un mode de réalisation de l'invention, la probabilité $p_{\xi_{t+1}|\xi_t=f_t}(f_{t+1})$ de transition de la fréquence $\xi_t$ de la trajectoire de fréquence de l'instant présent t à la fréquence $\xi_{t+1}$ de la trajectoire de fréquence de l'instant suivant t+1 suit une loi conditionnelle gaussienne centrée sur la fréquence $f_t$ du spectrogramme filtré à l'instant t.

Suivant un mode de réalisation de l'invention, la loi conditionnelle gaussienne centrée sur la fréquence $f_t$ a un écart-type $\sigma_t = \Delta t . \gamma_t$ où $\Delta t$ est une résolution temporelle calculée du spectrogramme de l'instant t, $\gamma_t$ est une vitesse moyenne calculée avec laquelle la trajectoire çt de fréquence évolue entre l'instant t et l'instant suivant t+1.

Suivant un mode de réalisation de l'invention, l'on estime par le calculateur la vitesse de déplacement de la roue du véhicule en multipliant la trajectoire de fréquence par 2nR, où R est le rayon de la roue et est prédéterminé ou estimé.

Suivant un mode de réalisation de l'invention, le filtre d'atténuation de bruit et/ou d'extraction de caractéristiques déterministes comprend un filtre médian glissant et/ou un filtre de séparation de caractéristiques déterministes par rapport à des caractéristiques aléatoires.

Un deuxième objet de l'invention est un dispositif d'estimation d'une vitesse de déplacement d'un véhicule ayant au moins une roue de roulement sur le sol, caractérisé en ce que le dispositif comporte :

un capteur inertiel ou vibratoire du véhicule pour mesurer un signal inertiel ou vibratoire,
un calculateur configuré pour calculer une pluralité de spectres du signal sur une pluralité de fenêtres temporelles successives définies par rapport à des instants successifs, la pluralité des spectres formant au moins un spectrogramme en fonction des instants successifs,
un filtre d'atténuation de bruit et/ou d'extraction de caractéristiques déterministes dans le spectrogramme, pour obtenir au moins un spectrogramme filtré du signal sur les instants successifs,
le calculateur étant configuré pour estimer une trajectoire de fréquence, représentative de la vitesse de la roue du véhicule dans le spectrogramme filtré sur les instants successifs, par: estimation, par le calculateur, d'une probabilité d'observation de la trajectoire de fréquence à partir d'une amplitude calculée du spectrogramme filtré pour chaque instant, estimation, par le calculateur, d'une loi a posteriori d'observation de la trajectoire de fréquence comme étant proportionnelle au produit d'une probabilité de transition prescrite de la trajectoire de fréquence et de la probabilité d'observation de la trajectoire de fréquence,
estimation, par le calculateur, de la trajectoire de fréquence pour les instants successifs à partir de la loi a posteriori d'observation de la trajectoire de fréquence,
le calculateur étant configuré pour estimer la vitesse de déplacement de la roue du véhicule pour les instants successifs à partir de la trajectoire de fréquence.

Un troisième objet de l'invention est un programme d'ordinateur, comportant des instructions de code pour la mise en oeuvre du procédé d'estimation de la vitesse de déplacement du véhicule tel que décrit ci-dessus, lorsqu'il est exécuté dans un calculateur.

L'invention sera mieux comprise à la lecture de la description qui va suivre, donnée uniquement à titre d'exemple non limitatif en référence aux figures ci-dessous des dessins annexés.

[Fig. 1] représente un exemple d'organigramme du déroulement du procédé d'estimation d'une vitesse de déplacement d'un véhicule à roue de roulement sur le sol suivant des modes de réalisation de l'invention.

[Fig. 2] représente schématiquement un exemple d'étape de calcul de spectrogrammes d'un signal du procédé, du dispositif et du programme d'estimation d'une vitesse de déplacement d'un véhicule à roue de roulement sur le sol suivant des modes de réalisation de l'invention.

[Fig. 3] représente un exemple de spectrogramme d'un signal temporel dans le plan temps-fréquence du procédé, du dispositif et du programme d'estimation d'une vitesse de déplacement d'un véhicule à roue de roulement sur le sol suivant des modes de réalisation de l'invention.

[Fig. 4] représente schématiquement un exemple de dispositif d'estimation d'une vitesse de déplacement d'un véhicule à roue de roulement sur le sol suivant des modes de réalisation de l'invention.

[Fig. 5] représente un exemple de signal brut pouvant être mesuré par le procédé, le dispositif et le programme d'estimation d'une vitesse de déplacement d'un véhicule à roue de roulement sur le sol suivant des modes de réalisation de l'invention.

[Fig. 6] représente un spectrogramme du signal de la figure 5, pouvant être calculé par le procédé, le dispositif et le programme d'estimation d'une vitesse de déplacement d'un véhicule à roue de roulement sur le sol suivant des modes de réalisation de l'invention.

[Fig. 7] représente un exemple de spectrogramme filtré du signal de la figure 5, pouvant être calculé par le procédé, le dispositif et le programme d'estimation d'une vitesse de déplacement d'un véhicule à roue de roulement sur le sol suivant des modes de réalisation de l'invention.

[Fig. 8] représente un exemple de probabilité d'observation de la trajectoire de fréquence, pouvant être calculée à partir du signal de la figure 5 par le procédé, le dispositif et le programme d'estimation d'une vitesse de déplacement d'un véhicule à roue de roulement sur le sol suivant des modes de réalisation de l'invention.

[Fig. 9] représente un exemple de probabilité de transition de la trajectoire de fréquence, pouvant être calculée à partir du signal de la figure 5 par le procédé, le dispositif et le programme d'estimation d'une vitesse de déplacement d'un véhicule à roue de roulement sur le sol suivant des modes de réalisation de l'invention.

[Fig. 10] représente un exemple de trajectoire de fréquence, pouvant être calculée à partir du signal de la figure 5 par le procédé, le dispositif et le programme d'estimation d'une vitesse de déplacement d'un véhicule à roue de roulement sur le sol suivant des modes de réalisation de l'invention.

[Fig. 11] représente schématiquement un exemple de dispositif d'estimation d'une vitesse de déplacement d'un véhicule à roue de roulement sur le sol suivant des modes de réalisation de l'invention.

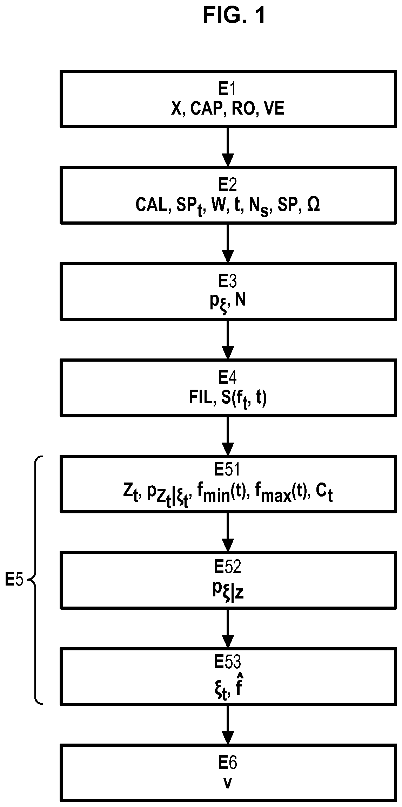

On décrit ci-dessous plus en détail en référence aux figures 1 à 10 des modes de réalisation et des exemples de réalisation du procédé, du dispositif 1 et du programme d'ordinateur pour l'estimation d'une vitesse v instantanée de déplacement d'un véhicule VE à roue RO de roulement sur le sol.

Dans le domaine d'application de l'invention, mentionné ci-dessus, dans le cas où des signaux vibratoires issus de systèmes mécaniques complexes tels que les véhicules terrestres ou les systèmes aéronautiques sont utilisés, ces signaux sont fortement affectés par du bruit (les bruits ambiants, de combustion et aérodynamique, etc), d'autant plus pour les sources rotatives interférentes et asynchrones. Ainsi, l'identification de la bonne trajectoire représentant la vitesse v de déplacement du véhicule VE dans le plan temps-fréquence est particulièrement difficile dans des conditions de faible rapport signal sur bruit : quelques pics liés à la fréquence instantanée peuvent être discriminés et de faux pics dus au bruit peuvent en prendre la place localement. Cette première difficulté peut être résolue en ajoutant une étape E4 de prétraitement de la représentation temps-fréquence par filtrage du bruit pour améliorer l'émergence de la signature des roues par rapport au bruit de fond. La méthode E4 de dé-bruitage proposée permet non seulement d'atténuer le bruit de fond mais aussi d'atténuer les composantes quasi-stationnaires dans le plan temps-fréquence dans le cas où la composante recherchée est fortement non-stationnaire (montée de régime, descente de régime) et inversement d'atténuer les composantes non-stationnaires dans le cas où la composante recherchée est quasi-stationnaire.

Ensuite, la nature multi-composante du signal et la possibilité d'existence de composantes asynchrones dans le moteur comme dans un moteur d'aéronef, fait que dans la même bande de fréquence, plusieurs harmoniques peuvent coexister, se croiser, être très proches ou même se confondre. Ainsi, en suivant simplement les maximums à chaque instant, on peut dévier de la bonne trajectoire et donc fournir une estimation erronée de la vitesse v. Pour pallier ce problème, l'invention prévoit dans la procédure d'estimation, en plus de l'amplitude du spectrogramme, des contraintes supplémentaires sur la trajectoire optimale se traduisant par l'estimation d'une probabilité de transition. La prise en compte de plusieurs harmoniques et de la direction de la trajectoire d'intérêt permet par exemple de donner plus de poids à des trajectoires plus proches de celle de la fréquence instantanée recherchée ce qui est avantageux pour les moments de couplage entres différentes composantes. L'ajout de ces contraintes de régularité par l'estimation d'une probabilité de transition permet également d'éviter les sauts et les discontinuités en présence de pics isolés liés au bruit résiduel après l'étape E4 de prétraitement.

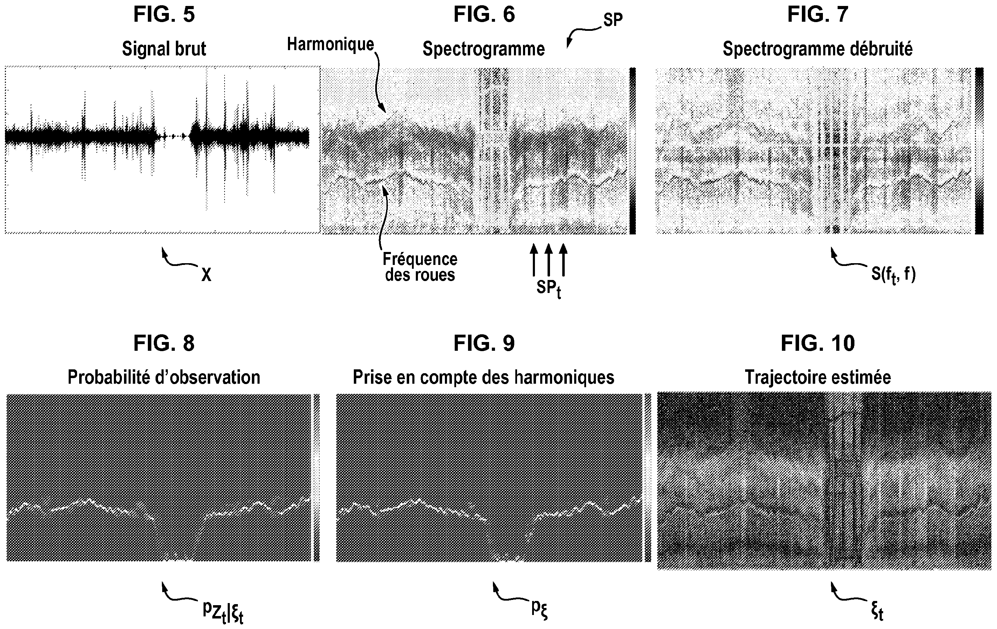

L'objectif est la recherche, parmi toutes les trajectoires possibles dans les spectrogrammes au cours du temps, d'une trajectoire optimale $\xi_t$ ou $\hat{\xi}$ de fréquence, vérifiant les contraintes considérées et représentative de la vitesse v de la roue RO du véhicule VE. L'optimalité d'une trajectoire par rapport à une autre est mesurée par une fonction de coût ou d'une façon équivalente par une densité de probabilité. Pour ce faire, les informations du spectrogramme et les contraintes sont exprimées sous forme de probabilités. Plus particulièrement, la trajectoire $\xi_t$ ou $\xi_1, \dots, \xi_{N_S}$ de fréquence peut être modélisée par une chaîne de Markov avec une densité de transition $p_{\xi_{t+1}|\xi_t}$ et une probabilité initiale donnée $p_{\xi_1}$. La densité de transition est définie en fonction des contraintes ajoutées (continuité, harmoniques, direction, etc.). A chaque pas de temps t, une observation du spectrogramme est fournie avec une probabilité $p_{Z_t|\xi_t}$ qui dépend de l'amplitude du spectrogramme. La trajectoire $\xi_t$ de fréquence de vitesse v de déplacement du véhicule VE peut être choisie comme étant celle qui maximise la loi a posteriori $p_{\xi_1, \dots, \xi_{N_S}|Z_1, \dots, Z_{N_S}}$ (ou en calculant sa moyenne). On peut également calculer les incertitudes sur cette estimation en s'intéressant aux moments d'ordres 2. Le nombre d'harmoniques à prendre en compte peut être entré par l'utilisateur sur l'interface physique INT1 d'entrée de données. Aux figures, le procédé d'estimation d'une vitesse v de déplacement d'un véhicule ayant une (ou plusieurs) roue RO de roulement sur le sol comporte un première étape E1 de mesure d'un signal temporel X, qui est inertiel ou vibratoire à partir d'un (ou plusieurs) capteur CAP inertiel ou vibratoire du véhicule. Ce capteur CAP inertiel ou vibratoire peut être situé en dehors du moteur du véhicule. Le capteur CAP inertiel ou vibratoire peut être présent sur la roue RO de roulement au sol du véhicule VE. Du fait d'un environnement extrême, un capteur est souvent sujet à des défauts ou à des erreurs de mesure. Le (ou les) capteur CAP peut être ou comprendre un (ou plusieurs) accéléromètre et/ou un (ou plusieurs) gyroscope et/ou un (ou plusieurs) capteur acoustique et/ou un (ou plusieurs) microphone. L'invention peut utiliser des capteurs inertiels qui ne sont pas situés dans le moteur. De plus, dans le cas où le véhicule VE comporte une centrale inertielle composée de 6 capteurs inertiels (3 accéléromètres et 3 gyroscopes), l'invention peut utiliser la redondance de capteurs CAP formés par plusieurs de ou tous ces 6 capteurs inertiels pour améliorer la précision de l'information de vitesse v (le risque d'erreur de mesure simultanée sur 6 capteurs étant plus faible). Un exemple de signal X brut en fonction du temps en abscisse est illustré à la figure 5.

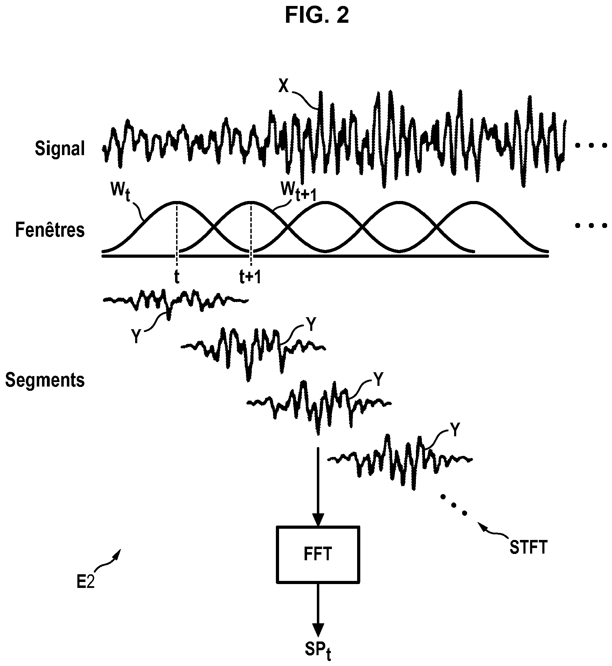

Au cours d'une deuxième étape E2 postérieure à la première étape E1, on calcule par un (ou plusieurs) calculateur CAL plusieurs spectres $SP_t$ du signal temporel X sur respectivement plusieurs fenêtres temporelles successives (ou glissantes) $W_t$, qui sont définies par rapport à des instants t successifs, ainsi que représenté par exemple à la figure 2. Chaque fenêtre temporelle $W_t$ peut être par exemple centrée sur l'instant t et a une largeur temporelle finie prédéterminée par rapport à l'instant t (par exemple les fenêtres temporelles successives $W_t$ peuvent avoir des largeurs temporelles identiques). Le calculateur CAL calcule plusieurs signaux temporels partiels successifs Y (ou segments temporels Y), égaux respectivement au signal X multiplié par les fenêtres temporelles successives $W_t$ pour les instants t successifs. Par exemple, les instants t successifs appartiennent à l'ensemble $\{1, \dots, N_s\}$, où $N_s$ est un nombre prédéfini, plus grand que 1. Les instants t peuvent être multiples d'un même pas d'échantillonnage à une constante prescrite près et être exprimés dans ce qui suit par un nombre entier de pas d'échantillonnage à une constante prescrite près. Le pas d'échantillonnage et/ou la fréquence d'échantillonnage peut être entré par l'utilisateur sur l'interface physique INT1 d'entrée de données ou être préenregistré dans le calculateur CAL. Le pas d'échantillonnage et/ou la fréquence d'échantillonnage définit le nombre d'échantillons acquis par seconde et les instants t.

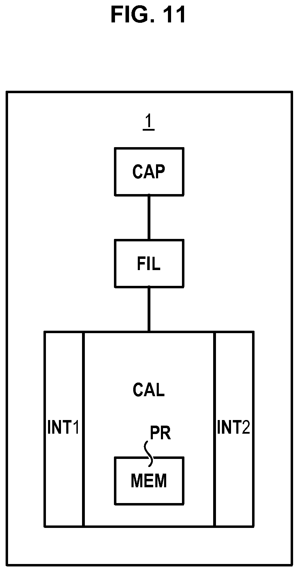

Le (ou les) calculateur CAL peut être ou comprendre un ou plusieurs ordinateurs, un ou plusieurs serveurs, une ou plusieurs machines, un ou plusieurs processeurs, un ou plusieurs microprocesseurs. Le calculateur CAL peut comprendre une ou plusieurs interfaces physiques INT1 d'entrée de données, une ou plusieurs interfaces physiques INT2 de sortie de données. Cette ou ces interfaces physiques INT1 d'entrée de données peuvent être ou comprendre un ou plusieurs claviers d'ordinateur, un ou plusieurs ports physiques de communication de données, un ou plusieurs écrans tactiles, ou autres. Cette ou ces interfaces physiques INT2 de sortie de données peuvent être ou comprendre un ou plusieurs ports physiques de communication de données, un ou plusieurs écrans, ou autres. Le dispositif 1 d'estimation de la vitesse v de déplacement du véhicule ayant une ou plusieurs roues RO de roulement sur le sol comporte notamment le (ou les) capteur CAL, le (ou les) calculateur CAL et le (ou les) filtre FIL, ainsi qu'illustré à titre d'exemple à la figure 11. Le filtre FIL peut être compris dans le calculateur CAL ou être distinct du calculateur CAL. Le capteur CAL est configuré pour exécuter l'étape E1 mentionnée ci-dessus. Le filtre FIL est configuré pour exécuter l'étape E4 mentionnée ci-dessous. Le calculateur CAL est configuré pour exécuter les étapes E2, E3, E5, E6 (et éventuellement E4) et les sous-étapes E51, E52, E53 mentionnées ci-dessous. Le calculateur CAL et/ou le filtre FIL et/ou le capteur CAP peut être programmé par un programme PR d'ordinateur comportant des instructions de code mettant en oeuvre le procédé d'estimation de la vitesse v de déplacement du véhicule, à savoir pour effectuer l'étape E1 et/ou E2 et/ou E3 et/ou E4 et/ou E5 et/ou E6 et la sous-étape E51 et/ou E52 et/ou E53. Le calculateur CAL comporte une mémoire MEM non volatile (ou un média MEM d'enregistrement non volatile), dans laquelle le programme PR d'ordinateur est enregistré d'une manière permanente. La mémoire MEM non volatile ou le média MEM d'enregistrement non volatile est lisible par un ordinateur et comporte des instructions enregistrées dessus, qui lorsqu'elles sont exécutées par un processeur, amènent le processeur à exécuter l'étape E1 et/ou E2 et/ou E3 et/ouE4 et/ou E5 et/ou E6 et la sous-étape E51 et/ou E52 et/ou E53. Le signal X et les données mentionnées ci-dessus et ci-dessous, utilisées par le procédé, le dispositif 1 et le programme PR sont enregistrées dans la mémoire MEM.

Le dispositif 1 d'estimation de la vitesse v de déplacement du véhicule VE à roue RO peut être embarqué sur le véhicule VE. Le dispositif 1 d'estimation de la vitesse v de déplacement peut être un outil d'aide à la navigation inertielle et peut être intégré à un dispositif de navigation inertiel, qui est inclus dans une centrale inertielle présente sur le véhicule. La centrale inertielle peut comprendre 3 accéléromètres dans 3 directions non parallèles, 3 gyroscopes autour de 3 directions non parallèles, le dispositif de navigation inertiel et des fonctions de navigation.

Suivant un mode de réalisation de l'invention, le calculateur CAL calcule au cours de la deuxième étape E2 pour chaque signal temporel partiel Y le spectre $SP_t$ égal à une transformée de Fourier (pouvant être par exemple une transformée de Fourier rapide FFT), limitée à la fenêtre temporelle $W_t$ respective, de ce signal temporel partiel Y (transformée de Fourier à courte durée, également appelée STFT en anglais). Le calculateur CAL calcule ainsi la transformée de Fourier sur les fenêtres glissantes $W_t$ du signal temporel X, et donc la pluralité de spectres $SP_t$ pour respectivement la pluralité d'instants t successifs. Chaque spectre $SP_t$ donne une amplitude du spectre en fonction de la fréquence f.

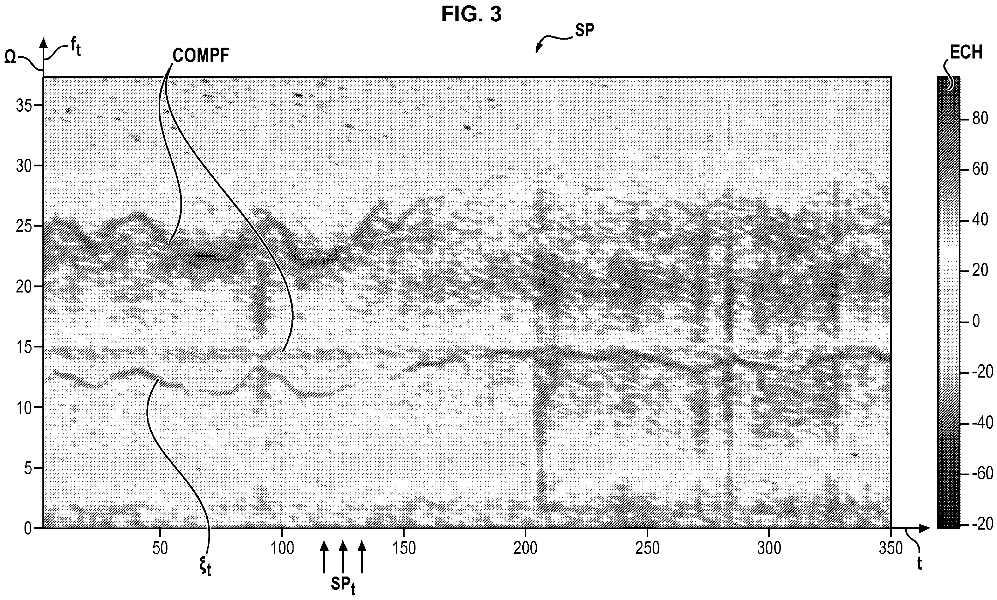

Pour chaque capteur CAP fournissant un signal X de mesure, la série des spectres $SP_t$ ainsi obtenus forme pour les instants t successifs un spectrogramme SP. Le spectrogramme SP est calculé par le calculateur CAL. Chaque spectre $SP_t$ forme une colonne du spectrogramme SP, ainsi qu'illustré à titre d'exemple à la figure 3. Ainsi, si une multiplicité de capteurs CAP fournissent une multiplicité de signaux X, le calculateur CAL calcule de manière correspondante une multiplicité de spectrogrammes SP et une multiplicité de spectrogrammes $S(f_t, t)$. Dans le cas de plusieurs spectro-grammes SP et $S(f_t, t)$, ces spectrogrammes SP et $S(f_t, t)$ peuvent subir des traitements différents pour le même capteur.

Une représentation en plan temps-fréquence, telle que par exemple celle des figures 3 et 6 à partir du signal de la figure 5, représente sous la forme d'une image :

- sur l'axe des temps en abscisses : les instants successifs t,

- sur l'axe des ordonnées : les fréquences $f_t$ des spectres respectifs $SP_t$ pour chaque instant t,

- en niveaux de gris et en échelle logarithmique sur les axes verticaux des temps t: la valeur absolue de l'amplitude du spectre respectif $SP_t$ pour chaque instant t, la valeur absolue de cette amplitude étant rapportée à l'échelle ECH de niveaux de gris.

La figure 3 représente à titre d'exemple des spectres $SP_t$ dans le plan temps-fréquence d'un signal X inertiel obtenu par un capteur CAP inertiel formé par un accéléromètre latéral enregistré sur une voiture VE. Les exemples d'enregistrements des figures 5 à 10 ont été obtenus sur une voiture VE à partir d'un capteur CAP inertiel. La réponse du système mécanique dépend fortement du régime dans lequel il opère d'où l'intérêt de conditionner les résultats d'analyse du signal X à la vitesse v à chaque instant. Une représentation temps-fréquence permet de révéler les signatures liées aux sources mécaniques. Une telle représentation fournit une idée sur l'évolution du contenu fréquentiel au cours du temps. D'autres représentations temps-fréquence peuvent aussi être utilisées telles que la représentation de Wigner ou autres.

Dans les véhicules VE à roue RO, les roues RO peuvent émettre des vibrations qui se manifestent dans le plan temps-fréquence par une suite de pics (trajectoire $\xi_t$ de fréquence). Les sources liées aux roues se manifestent par des trajectoires continues et lisses (trajectoire $\xi_t$ de fréquence) sans sauts brusques de la vitesse v. La fréquence fonda-mentale (trajectoire $\xi_t$ de fréquence) et ses harmoniques (autres composantes fréquentielles COMPF) sont les plus énergétiques dans le plan temps-fréquences. La fréquence de la vitesse v de la roue RO du véhicule VE se manifeste dans les spectres successifs par une trajectoire régulière variant selon l'état du système (accélération, décélération, arrêt etc.). Ainsi, une façon simple d'estimer la fréquence instantanée du signal X revient alors à chercher les positions des crêtes les plus énergétiques dans la bande de fréquence de la composante à suivre (trajectoire $\xi_t$ de fréquence). La prise en compte des harmoniques multiples de la fondamentale des roues et l'ajout de contraintes de continuité et les informations sur la direction permettent d'atténuer les trajectoires continues liées à des composantes parasites telles que la combustion du moteur du véhicule.

Au cours d'une quatrième étape E4 postérieure à la deuxième étape E2, on filtre les spectres $SP_t$ par un (ou plusieurs) filtre FIL d'atténuation de bruit et/ou d'extraction de caractéristiques déterministes, pour obtenir un spectro-gramme $S(f_t, t)$ filtré du signal X sur les instants t successifs. Dans le spectrogramme $S(f_t, t)$, la fréquence pour l'instant t est désignée par $f_t$. Ce prétraitement E4 permet de fournir une représentation temps-fréquence plus propre. Dans cette étape E4, on peut différencier les deux cas où la composante cible (vitesse v) est quasi-stationnaire ou fortement non-stationnaire. Dans le cas de composante cible (vitesse v) quasi-stationnaire, le filtre FIL peut comprendre un filtre de séparation (en anglais DRS : deterministic random séparation) de caractéristiques déterministes (et donc prédictibles) par rapport à des caractéristiques aléatoires (et donc non prédictibles), y compris le bruit de fond et les composantes interférentes non-stationnaires. Dans le cas de composante cible (vitesse v) fortement non-stationnaire, le filtre FIL peut être configuré pour diminuer le bruit de fond et les fréquences invariantes en temps (par exemple bruit de ventilation, composantes électriques) et peut comprendre à cet effet un filtre médian glissant. Un exemple de spectrogramme $S(f_t, t)$ filtré à partir du signal de la figure 5 est illustré à la figure 7. La variation maximum de fréquence (pour assurer la continuité du signal) du spectre filtré $S(f_t, t)$ peut être déterminée par le calculateur CAL ou avoir été préenregistrée dans le calculateur CAL ou être prescrite par l'utilisateur sur l'interface physique INT1 d'entrée de données.

Au cours d'une cinquième étape E5 postérieure à la quatrième étape E4, on estime par le calculateur CAL une trajectoire $\xi_t$ de fréquence, représentative de la vitesse v instantanée de la roue RO du véhicule VE dans le spectrogramme $S(f_t, t)$ filtré sur les instants t successifs. Cette étape E5 comporte les sous-étapes E51, E52, E53 qui seront décrites ci-dessous. Dans ce qui suit, la trajectoire $\xi_t$ de fréquence est également notée ξ.

En effet, la vitesse v de déplacement de la roue RO du véhicule VE se traduit par une certaine composante fréquentielle dans le plan temps-fréquence du spectrogramme $S(f_t, t)$, cette composante fréquentielle pouvant avoir une certaine fréquence (égale dans ce qui suit à la trajectoire $\xi_t$ de fréquence) variant dans le temps et une certaine amplitude variant dans le temps. Cette fréquence $\xi_t$ variant au cours du temps t dans le spectrogramme $S(f_t, t)$ forme donc une trajectoire $\xi_t$ de fréquence de la vitesse v de la roue RO du véhicule VE en fonction du temps t dans le spectrogramme $S(f_t, t)$ (et donc dans le plan temps-fréquence de la figure 3). Cette trajectoire $\xi_t$ de fréquence est mélangée à des trajectoires d'autres fréquences d'autres composantes fréquentielles COMPF dans le spectrogramme $S(f_t, t)$, ainsi qu'illustré à la figure 3. Suivant un mode de réalisation, pour la roue RO roulant sur le sol, la fréquence instantanée de rotation de la roue RO (nombre de tours par secondes) aux instants successifs t est la trajectoire $\xi_t$ de fréquence en fonction du temps t. Suivant un autre mode de rélaisation, pour la roue RO roulant sur le sol, la vitesse tangentielle de la roue RO (nombre de tours par secondes multiplié par le rayon de la roue RO et multiplié par 2π) aux instants successifs t est la trajectoire $\xi_t$ de fréquence en fonction du temps t.

Soit $N_s$ le nombre (supérieur ou égal à 2) de segments temporels ou d'instants successifs t dans le spectrogramme $S(f_t, t)$ (axe des abscisses à la figure 2), c'est-à-dire que les instants $t \in \{1, ..., N_s\}$. Soit $L_s$ le nombre (supérieur ou égal à 2) de bacs de fréquences dans le spectrogramme filtré $S(f_t, t)$. On note $f_t$ les fréquences de chaque spectrogramme $S(f_t, t)$ à l'instant t. On note également par $\overline{F} = (\bar{f}_1, ..., f_{N_S})$ la vraie trajectoire çt inconnue de fréquence à estimer. Le nombre $N_s$ d'instants successifs t peut être déterminé par le calculateur CAL ou avoir été préenregistré dans le calculateur CAL ou être prescrit par l'utilisateur sur l'interface physique INT1 d'entrée de données.

Suivant un mode de réalisation de l'invention, on détermine au cours de la deuxième étape E2 par le calculateur CAL un support Ω de valeurs $\{f^1, ..., f^{Ls}\}$ de fréquence, à savoir $\Omega = [f^1, ..., f^{Ls}]$. Le support Ω de valeurs $[f^1, ..., f^{Ls}]$ est le support des fréquences dus spectrogramme $S(f_t, t)$ et peut comporter toutes les valeurs de fréquences comprises entre zéro et une fréquence maximum, par exemple des fréquences réparties régulièrement, pouvant être multiples d'un pas de fréquence prescrit à une constante prescrite près. Le nombre Ls de valeurs de fréquence du support Ω est fini et peut être déterminé par le calculateur CAL ou avoir été préenregistré dans le calculateur CAL ou être prescrit par l'utilisateur sur l'interface physique INT1 d'entrée de données. Le pas de fréquence peut être calculé par le calculateur CAL en fonction de la fréquence d'échantillonnage et/ou en fonction de la durée de la fenêtre $W_t$.

On note également par $\overline{F} = (\bar{f}_1, ..., f_{N_S})$ la trajectoire çt de fréquence à estimer. On a donc pour les instants successifs t allant de 1 à $N_s$, la trajectoire $\xi_t$ de fréquence égale à un ensemble de fréquences $\xi_1, ..., \xi_{N_S}$ c'est-à-dire $\xi_t = (\xi_1, ..., \xi_{N_S})$, qui est une variable aléatoire modélisant la trajectoire çt à estimer. La trajectoire çt de fréquence peut prendre les valeurs de fréquence $\xi_1, ..., \xi_{N_S}$ dans le support $\Omega = [f^1, ..., f^{Ls}]$ de valeurs de fréquence du spectrogramme $S(f_t, t)$.

La chaîne des fréquences $\xi_1, ..., \xi_{N_S}$ successives de la trajectoire $\xi_t$ de fréquence au cours du temps t peut être décrite par une probabilité de transition $p_{\xi_{t+1}|\xi_t}$ et une probabilité initiale donnée $p_{\xi_1}$.

Suivant un mode de réalisation, au cours de la troisième étape E3 postérieure à la deuxième étape E2 et antérieure à la quatrième étape E4, on prescrit par le calculateur CAL une probabilité de transition $p_\xi$ de la trajectoire $\xi_t$ de fréquence selon une chaîne de Markov liant la probabilité de transition de la fréquence $\xi_t$ de cette trajectoire à l'instant présent t à la fréquence $\xi_{t+1}$ de cette trajectoire à l'instant suivant t+1, en partant de la probabilité initiale donnée $p_{\xi_1}$. Cette probabilité de transition $p_\xi$ suit une loi a priori. Dans ce qui suit, la probabilité de transition $p_\xi$ de la trajectoire çt de fréquence est notée $p_\xi(f_1, ..., f_{N_S})$. Un exemple de probabilité de transition $p_\xi$ calculée à partir du signal de la figure 5 est illustré à la figure 9. On a spécifié à l'avance la probabilité de transition décrivant les évolutions possibles de la vitesse au cours du temps. Concrètement, une grande variation de fréquence a une probabilité faible et une petite variation a une probabilité haute. Cette probabilité de transition définit ce qu'on appelle une chaîne de Markov.

Suivant un mode de réalisation de l'invention, le calculateur CAL calcule au cours de l'étape E3 la probabilité $p_\xi$ $(f_1, ..., f_{N_S})$ de transition de la trajectoire çt de fréquence pour l'instant $N_s$ en partant de la probabilité initiale donnée $p_{\xi_1}$ de l'instant 1, pour $t \in \{1, ..., N_s\}$ et pour chaque fréquence $f_t \in \Omega$ (c'est-à-dire chaque $f_1, ..., f_{N_S} \in \Omega$) selon l'équation suivante :

$$p_\xi(f_1, ..., f_{N_s}) = p_{\xi_1}(f_1) \prod_{t=1}^{N_s-1} p_{\xi_{t+1}|\xi_t = f_t}(f_{t+1})$$

$p_{\xi_1}(f_1)$ est la probabilité initiale donnée de l'instant t=1. Dans cette équation, $p_{\xi_{t+1}|\xi_t=ft}(f_{t+1})$ est la probabilité de transition de la fréquence çt de la trajectoire de l'instant présent t à la fréquence $\xi_{t+1}$ de la trajectoire de l'instant suivant t+1.

On a donc la loi jointe de la trajectoire ξ de fréquence, qui est donnée par :

$$\forall (f_1, \ldots, f_{N_s}) \in \Omega^{N_s}, p_\xi(f_1, \ldots, f_{N_s}) = p_{\xi_1}(f_1) \prod_{t=1}^{N_s-1} p_{\xi_{t+1}|\xi_t=f_t}(f_{t+1}) \text{ (loi a priori (2))}$$

Suivant un mode de réalisation de l'invention, le calculateur CAL calcule au cours de l'étape E3 la probabilité $p_{\xi_{t+1}|\xi_t=ft}(f_{t+1})$ de transition de la fréquence çt de la trajectoire de l'instant présent t à la fréquence $\xi_{t+1}$ de la trajectoire de l'instant suivant t+1 selon une loi conditionnelle gaussienne N centrée sur la fréquence $f_t$ du spectrogramme filtré (S($f_t$, t)) à l'instant t, c'est-à-dire

$$p_{\xi_{t+1}|\xi_t=f_t}(f) \equiv N(f_t, \sigma_t^2)$$ , où $\sigma_t^2$ est la variance de la loi conditionnelle gaussienne N et la fréquence $f_t$ est la moyenne de la loi conditionnelle gaussienne N. Cela permet de maintenir une certaine régularité de l'harmonique à suivre et d'ajouter des contraintes de continuités entre les instants consécutifs t et t+1.

Suivant un mode de réalisation de l'invention, le calculateur CAL calcule au cours de l'étape E3 l'écart-type $\sigma_t$ de la loi conditionnelle gaussienne N comme étant $\sigma_t = \Delta t . \gamma_t$, où $\Delta t$ est une résolution temporelle calculée du spectrogramme filtré (S($f_t$, t)), $\gamma_t$ est une vitesse moyenne calculée avec laquelle la trajectoire çt de fréquence évolue entre l'instant t et l'instant suivant t+1. Ainsi, en diminuant la variance $\sigma_t^2$, l'effet de lissage sera plus fort. Le calcul de la loi de transition $p_{\xi_{t+1}|\xi_t=ft}(f_{t+1})$ par le calculateur CAL peut aussi tenir compte de la direction d'évolution (par exemple montée, descente, stabilité) de la trajectoire $\xi_t$ de fréquence lorsque cette direction est fournie à chaque instant t. Par exemple, le calculateur CAL peut utiliser une loi de transition $p_{\xi_{t+1}|\xi_t=ft}(f_{t+1})$, qui est tronquée sur $\xi_{t+1} \geq \xi_t$ dans le cas d'une montée de la trajectoire çt de fréquence et qui est tronquée sur $\xi_{t+1} \leq \xi_t$ dans le cas d'une descente de la trajectoire çt de fréquence. Dans le cas où la trajectoire $\xi_t$ de fréquence devient constante (arrêt de descente et de montée), par exemple à une valeur nulle (arrêt du véhicule VE correspondant à une vitesse v nulle), il faut mettre $\gamma_t$ à une valeur assez faible.

A la première sous-étape E51 de la cinquième étape E5, on estime par le calculateur CAL une probabilité $p_{Z_t|\xi_t}$ d'observation de la trajectoire $\xi_t$ de fréquence de vitesse v de déplacement du véhicule VE à partir d'une amplitude calculée du spectrogramme S($f_t$, t) filtré pour chaque instant t. Dans ce qui suit, la probabilité $p_{Z_t|\xi_t}$ d'observation de la trajectoire $\xi_t$) de fréquence de vitesse v de déplacement du véhicule VE est notée $p_{Z|\xi=(f_1,\ldots,f_{N_s})}(z_1, \ldots, z_{N_s})$. Un exemple de probabilité $p_{Z_t|\xi_t}$ d'observation calculée à partir du signal de la figure 5 est illustré à la figure 8.

Suivant un mode de réalisation de l'invention, le calculateur CAL calcule au cours de la sous-étape E51 la probabilité $p_{Z_t|\xi_t}$ d'observation sachant une trajectoire comme dépendant de l'amplitude calculée du spectrogramme S($f_t$, t) filtré et normalisé pour chaque instant t.

Suivant un mode de réalisation de l'invention, le calculateur CAL calcule au cours de la sous-étape E51 la probabilité $p_{Z_t|\xi_t}$ d'observation de la trajectoire $\xi_t$ de fréquence pour t e {1, …, $N_s$} et pour chaque fréquence $f_t \in \Omega$ (c'est-à-dire chaque $f_1, \ldots, f_{N_s} \in \Omega$) selon l'équation suivante :

$$p_{Z|\xi=(f_1,\ldots,f_{N_s})}(z_1, \ldots, z_{N_s}) = \prod_{t=1}^{N_s} p_{Z_t|\xi_t=f_t}(z_t)$$

Le calculateur CAL calcule au cours de la sous-étape E51 le vecteur binaire Z ou $Z_t$ d'observation ayant une taille $N_s$ prescrite pour l'instant t ∈ {1, ...,$N_s$} (et pour chaque fréquence $f_t \in \Omega$, c'est-à-dire chaque $f_1, \ldots, f_{N_s} \in \Omega$) et étant tel que chacune des coordonnées $Z_t[f]$ du vecteur binaire $Z_t$ d'observation (les coordonnées $Z_t[f]$ du vecteur binaire $Z_t$ d'observation étant donc ($z_1, \ldots, z_{N_s}$)) est égale à :

$$Z_t[f] = 1 \text{ si } \bar{f}_t = f = f_t,$$

sinon $Z_t[f] = 0$ pour $f \neq \bar{f}_t$ ou $f \neq f_t$.

Dans ce qui précède, Z = ($Z_1, \ldots, Z_{N_s}$) est l'observation.

La densité ou probabilité $p_{Z_t|\xi_t}$ d'observations s'écrit alors comme suit :

$$\forall (f_1, \ldots, f_{N_s}) \in \Omega^{N_s}, \forall (z_1, \ldots, z_{N_s}), p_{Z|\xi=(f_1,\ldots,f_{N_s})}(z_1, \ldots, z_{N_s}) = \prod_{t=1}^{N_s} p_{Z_t|\xi_t=f_t}(z_t) \qquad \text{(loi}$$

d'observation (1))

La probabilité d'observation $p_{Z_t|\xi_t}$ est définie à partir du l'amplitude $|S(f_t, t)|$ du spectrogramme $S(f_t, t)$ pour $f_t \in \Omega$. En effet, on peut avoir une idée sur la trajectoire cible $\xi_t$ et alors confirmer si $\xi_t = f_t$ est très probable d'être observé ou non selon le niveau de l'amplitude du spectrogramme au point $(f_t, t)$ par rapport aux autres points $(f, t)$, $f \in \Omega$.

L'idée principale de la méthode utilisée est de calculer une densité de probabilité à partir du spectrogramme décrivant la répartition des observations sachant la fréquence cible $\xi_t$ à chaque instant t. En effet, pour çt = $f_t \in \Omega$ donné, le coefficient de $Z_t$ pour la fréquence $f_t$ a une forte probabilité d'être égale à 1 à l'instant t, c'est-à-dire il est très probable que la vraie fréquence $\bar{f}_t$ est égale à $f_t$.

Suivant un mode de réalisation de l'invention, le calculateur CAL calcule au cours de la sous-étape E51 la probabilité $p_{Z_t|\xi_t}$ d'observation de la trajectoire $\xi_t$ de fréquence selon les équations suivantes :

$$p_{Z_t|\xi_t=f_t}(z_t) = \prod_{f \in \Omega} p_{Z_t[f]|\xi_t=f_t}(z_t[f])$$

pour $\xi_t = f_t \in \Omega$ avec $p_{Z_t[f]|\xi_t=f_1}(z_t[f] = 1)$ dépendant de l'amplitude calculée du spectrogramme $(S(f_t, t))$ filtré pour chaque instant (t), $p_{Z_t[f]|\xi_t=f_1}(z_t[f] = 1) = 0$ pour $f \neq f_t$.

Suivant un mode de réalisation de l'invention, le calculateur CAL calcule au cours de la sous-étape E51 la probabilité $p_{Z_t|\xi_t}$ d'observation selon l'équation suivante : $p_{Z_t|\xi_t=f_t}(z_t) = |S(f_t, t)|.1_{[f_{min}(t),f_{max}(t)]}(f_t)$

où $|S(f_t, t)|$ est l'amplitude calculée du spectrogramme $S(f_t, t)$ filtré pour chaque instant t, $f_{min}(t)$ est une trajectoire minimale de fréquence ayant été mesurée, $f_{max}(t)$ est une trajectoire maximale de fréquence ayant été mesurée, $f_{min}(t)$ et $f_{max}(t)$ sont telles que $f_{min}(t) \leq \xi_t \leq f_{max}(t)$, $1_{[f_{min}(t),f_{max}(t)]}(f_t)$ est une fonction prenant la valeur 1 pour $f_t$ entre $f_{min}(t)$ et $f_{max}(t)$ et prenant la valeur 0 pour $f_t$ en-dessous de $f_{min}(t)$ ou au-dessus de $f_{max}(t)$.

Suivant un mode de réalisation de l'invention, le calculateur CAL calcule au cours de la sous-étape E51

$$p_{Z_t[f_t]|\xi_t=f_t}(z_t[f_t] = 1) = \frac{1}{c_t}|S(f_t,t)|.1_{[f_{min}(t),f_{max}(t)]}(f_t)$$ où $|S(f_t, t)|$ est l'amplitude calculée du spectrogramme $S(f_t, t)$ filtré pour chaque instant t. Le calculateur CAL calcule au cours de la sous-étape E51 le coefficient diviseur $c_t$ comme étant le maximum de $z_t[f]$ pour la fréquence f située entre la trajectoire minimale $f_{min}(t)$ de fréquence et la trajectoire maximale $f_{max}(t)$ de fréquence, c'est-à-dire :

$$c_t = \max_{f \in [f_{min}(t), f_{max}(t)]} z_t[f]$$.

Le calculateur CAL mesure ou détermine au cours de la sous-étape E51 la trajectoire minimale $f_{min}(t)$ de fréquence. Le calculateur CAL mesure ou détermine au cours de la sous-étape E51 la trajectoire maximale $f_{max}(t)$ de fréquence. La trajectoire çt de fréquence de vitesse v de déplacement du véhicule VE est comprise entre la trajectoire minimale $f_{min}(t)$ de fréquence et la trajectoire maximale $f_{max}(t)$ de fréquence. On a donc $f_{min}(t) \leq \xi_t \leq f_{max}(t)$.

Le calculateur CAL calcule au cours de la sous-étape E51 la fonction $1_{[f_{min}(t),f_{max}(t)]}(ft)$ comme étant une fonction à créneau unique entre $f_{min}(t)$ et $f_{max}(t)$, c'est-à-dire la fonction prenant la valeur 1 pour $f_t$ entre $f_{min}(t)$ et $f_{max}(t)$ et prenant la valeur 0 pour $f_t$ en-dessous de $f_{min}(t)$ ou au-dessus de $f_{max}(t)$.

La trajectoire minimale $f_{min}(t)$ de fréquence et la trajectoire maximale $f_{max}(t)$ de fréquence permettent de ne tenir compte que des pics des composantes au voisinage de la trajectoire çt de fréquence à suivre et définissent une bande fréquence dans laquelle se trouve la trajectoire çt de fréquence.

Suivant un mode de réalisation de l'invention, la trajectoire minimale $f_{min}(t)$ de fréquence est fixe dans le temps t, c'est-à-dire $f_{min}(t) = f_{min}$.

Suivant un mode de réalisation de l'invention, la trajectoire maximale $f_{max}(t)$ de fréquence est fixe dans le temps t, c'est-à-dire $f_{max}(t) = f_{max}$.

Suivant un autre mode de réalisation de l'invention, la trajectoire minimale $f_{min}(t)$ de fréquence est variable dans le temps t.

Suivant un autre mode de réalisation de l'invention, la trajectoire maximale $f_{max}(t)$ de fréquence est variable dans le temps t.

Dans le cas où la trajectoire $\xi_t$ de fréquence cible s'étale sur une large bande de fréquence (par exemple rampe) où d'autres harmoniques parasites peuvent coexister, il est préférable de choisir une bande de fréquence variable dans le temps t. Cela revient à définir deux trajectoires $f_{min}(t)$ et $f_{max}(t)$ enveloppant la trajectoire çt de fréquence. Par exemple, la bande de fréquence choisie ne contient qu'une seule trajectoire continue complète $\xi_t$ sur toute la période du temps t considérée. Les contraintes de continuité qui sont introduites par la loi de transition $p_\xi$ ont comme effet de donner plus de poids aux pics liés à une courbe régulière de la trajectoire $\xi_t$ de fréquence. Suivant un mode de réalisation de l'invention,

les trajectoires $f_{min}(t)$ et $f_{max}(t)$ peuvent être calculées automatiquement par le calculateur CAL. Suivant un mode de réalisation de l'invention, les trajectoires $f_{min}(t)$ et $f_{max}(t)$ peuvent être prescrites par un utilisateur au calculateur CAL par sélection aléatoire des points du spectrogramme $S(f_t, t)$ enveloppant la suite des crêtes à suivre (maximums d'amplitude) du spectrogramme $S(f_t, t)$, puis par interpolation de ces points. La définition de la bande de fréquence est optionnelle mais permet d'améliorer considérablement les performances de la méthode et de minimiser le coût de calcul surtout dans le cas où le signal observé contient un grand nombre d'harmoniques. On peut également identifier les intervalles d'arrêt et inclure cette information dans la définition de $f_{min}$ et $f_{max}$ et aussi dans la loi de transition par la suite. Si cette information n'est pas disponible, une façon simple d'estimer les instants d'arrêt à partir du spectrogramme $S(f_t, t)$ est de comparer la somme des amplitudes du spectrogramme $S(f_t, t)$ à chaque instant $t_0$ sur toutes les fréquences $f$ à un seuil donné ( $Si \Sigma_f A(f, t_0) < \varepsilon$ , alors arrêt à l'instant $t_0$, où $\varepsilon > 0$ est un seuil à fixer (par exemple la médiane de toutes les valeurs sur tout l'axe de temps)). La trajectoire minimale $f_{min}(t)$ de fréquence et/ou la trajectoire maximale $f_{max}(t)$ de fréquence peut être entrée par l'utilisateur sur l'interface physique INT1 d'entrée de données ou avoir été préenregistrée dans le calculateur CAL. Dans le cas où le dispositif 1 est intégré à un dispositif de navigation du véhicule VE, des données a priori possibles tels que par exemple $f_{min}$ = 0 et $f_{max}$ peuvent être entrées par l'utilisateur sur l'interface physique INT1 d'entrée de données ou avoir été préenregistrée dans le calculateur CAL, pour une navigation en temps réel.

La probabilité de l'observation $Z_t$ à chaque instant $t$ est calculée par le calculateur CAL sachant la fréquence cible $\xi_t = f_t \in \Omega$.

Suivant un mode de réalisation de l'invention, dans le cas d'un signal mono-composant avec une FI , si on dispose du spectrogramme $S(f_t, t)$ du signal sans bruit alors $p_{Z_t|\xi_t \neq \bar{f}_t}(z_t) = 0 \ \forall \ f_t \neq \bar{f}_t$ c'est-à-dire le spectre $Z_t$ ne peut être observé que pour la fréquence $\bar{f}$. Dans le cas contraire, $p_{Z_t|\xi_t = f_t}$ est importante pour toutes les fréquences $f_t$ où l'amplitude du spectrogramme $S(f_t, t)$ est maximale à l'instant t. Ainsi, la fonction $f_t \rightarrow p_{Z_t|\xi_t = f_t}(z_t)$ peut être multimodale dans le cas où plusieurs pics (le plus souvent liés au bruit) sont présents à l'instant $t$ dans $[f_{min}(t), f_{max}(t)]$. C'est-à-dire ce même spectre observé peut correspondre à plusieurs solutions de fréquences plausibles $f_t$. En considérant l'amplitude du spectrogramme $S(f_t, t)$ pour plusieurs multiples de l'harmonique cible, nous pourrons favoriser un mode par rapport à un autre. Suivant un mode de réalisation de l'invention, Le calculateur CAL calcule au cours de la sous-étape E51 la probabilité $p_{Z_t|\xi t}$ d'observation selon l'équation suivante : (la probabilité s'écrit dans ce cas comme le produit de plusieurs probabilités) :

$$p_{Z_t|\xi_t = f_t}(z_t) = \prod_{j| \ j.f_t < \frac{F_s}{2}} \frac{1}{c_t} |S(j.f_t, t)| \ 1_{[f_{min}(t), f_{max}(t)]} (f_t)$$

où $y$ peut être entier ou réel positif quelconque, vérifiant $j.f_t < \frac{F_s}{2}$ ,

et où $F_s$ est une fréquence de seuil, ayant été prédéterminée en fonction du spectrogramme $S(f_t, t)$.

A la deuxième sous-étape E52 de la cinquième étape E5, on estime par le calculateur CAL une loi a posteriori $p_{\xi|Z}$ d'observation de la trajectoire $\xi_t$ de fréquence ou de la fréquence $\xi_t$. Cette loi a posteriori $p_{\xi|Z}$ d'observation est proportionnelle au produit de la probabilité de transition $p_\xi$ de la trajectoire $\xi_t$ de fréquence et de la probabilité $p_{Z_t|\xi t}$ d'observation de la trajectoire $\xi_t$ de fréquence, c'est-à-dire $p_{\xi|Z} \propto p_\xi \cdot p_{Z_t|\xi t}$. Cette loi a posteriori $p_{\xi|Z}$ d'observation de la trajectoire $\xi_t$ de fréquence est également notée $p_{\xi_1,...,\xi_{N_S}|Z_1,...,Z_{N_S}}$ ou $p_{\xi|Z}(f_1, ... , f_{N_S})$.

Suivant un mode de réalisation de l'invention, à la deuxième sous-étape E52 de la cinquième étape E5, le calculateur CAL calcule la loi a posteriori $p_{\xi|Z}$ d'observation

$$p_{\xi|Z}(f_1, ... , f_{N_S}) \propto p_\xi(f_1, ... , f_{N_S}) \ p_{Z|\xi = (f_1,...,f_{N_S})}(z_1, ... , z_{N_S})$$

Suivant un mode de réalisation de l'invention, à la deuxième sous-étape E52 de la cinquième étape E5, le calculateur CAL calcule la loi a posteriori $p_{\xi|Z}$ d'observation

$$p_{\xi|Z}(f_1, ... , f_{N_S}) \propto \prod_{t=1}^{N_S-1} p_{\xi_{t+1}|\xi_t = f_t}(f_{t+1}) \ \prod_{t=1}^{N_S} p_{Z_t|\xi_t = f_t}(z_t)$$

Suivant un mode de réalisation de l'invention, à la deuxième sous-étape E52 de la cinquième étape E5, le calculateur CAL calcule la loi a posteriori $p_{\xi|Z}$ d'observation égale au produit de la probabilité de transition $p_\xi$ de la trajectoire $\xi_t$ de fréquence, de la probabilité $p_{Z_t|\xi t}$ d'observation de la trajectoire $\xi_t$ de fréquence et d'un facteur multiplicatif C calculé par le calculateur CAL, c'est-à-dire $p_{\xi|Z} = C \cdot p_\xi \cdot p_{Z_t|\xi t}$.

Suivant un mode de réalisation de l'invention, le facteur multiplicatif C peut être pris égal à 1.

Suivant un mode de réalisation de l'invention, à la deuxième sous-étape E52 de la cinquième étape E5, le calculateur CAL calcule le facteur multiplicatif C égal à

$$C^{-1} = \sum_{f_1 \in \Omega} \sum_{f_2 \in \Omega} \cdots \sum_{f_{N_s} \in \Omega} p_\xi(f_1, \dots, f_{N_s}) \, p_{Z|\xi=(f_1, \dots, f_{N_s})}(z_1, \dots, z_{N_s})$$

Suivant un mode de réalisation de l'invention, à la deuxième sous-étape E52 de la cinquième étape E5, le calculateur CAL calcule la loi a posteriori $p_{\xi|Z}$ d'observation égale à

$$p_{\xi|Z}(f_1, \dots, f_{N_s}) = C . p_\xi(f_1, \dots, f_{N_s}) \, p_{Z|\xi=(f_1, \dots, f_{N_s})}(z_1, \dots, z_{N_s})$$

Suivant un mode de réalisation de l'invention, à la deuxième sous-étape E52 de la cinquième étape E5, le calculateur CAL calcule la loi a posteriori $p_{\xi|Z}$ d'observation

$$p_{\xi|Z}(f_1, \dots, f_{N_s}) = C \cdot \prod_{t=1}^{N_s-1} p_{\xi_{t+1}|\xi_t=f_t}(f_{t+1}) \prod_{t=1}^{N_s} p_{Z_t[f_t]|\xi_t=f_t}(z_t[f_t] = 1)$$

A la troisième sous-étape E53 de la cinquième étape E5, le calculateur CAL estime la trajectoire $\xi_t$ de fréquence pour les instants t successifs à partir de la loi a posteriori $p_{\xi|Z}$ d'observation de la trajectoire $\xi_t$ de fréquence. Le calculateur CAL calcule comme trajectoire çt de fréquence la trajectoire optimale $\hat{\xi} = (\widehat{f_1}, \widehat{f_2}, \dots, \widehat{f_{N_s}})$ parmi toutes les trajectoires possibles dans le ou les spectrogrammes S($f_t$, t) à partir de la loi a posteriori $p_{\xi|Z}$ d'observation de la trajectoire $\xi_t$ de fréquence, sachant les observations Z données par la probabilité $p_{Z_t|\xi_t}$ d'observation. Un exemple de trajectoire $\xi_t$ de fréquence calculée à partir du signal de la figure 5 est illustré à la figure 10. La trajectoire de fréquence çt ou $\hat{f}$ et/ou une ou des valeurs de fréquences de la trajectoire de fréquence çt ou $\hat{f}$ (pouvant être égale à la fréquence instantanée de la roue RO) peut être fournie par le calculateur CAL sur l'interface physique INT2 de sortie de données, par exemple en étant affichée sur un écran. Un intervalle de confiance du calcul, ayant été calculé par le calculateur, peut être fourni par le calculateur CAL sur l'interface physique INT2 de sortie de données, par exemple en étant affiché sur un écran. Dans le cas où le dispositif 1 est intégré à un dispositif de navigation du véhicule VE, la trajectoire de fréquence çt ou $\hat{f}$ et/ou une ou des valeurs de fréquences de la trajectoire de fréquence çt ou $\hat{f}$ peut être stockée dans la mémoire M ou dans une autre mémoire et être évaluée en temps réel dans un autre filtre pour une navigation en temps réel.

Suivant un mode de réalisation de l'invention, à la troisième sous-étape E53 de la cinquième étape E5, le calculateur CAL estime pour chaque instant t la trajectoire $\xi_t$ de fréquence comme étant dans le support $\Omega$ celle des valeurs $f^1, \dots, f^{Ls}$ de fréquence, qui maximise la loi a posteriori $p_{\xi|Z}$ d'observation de la trajectoire $\xi_t$ de fréquence de vitesse v de déplacement du véhicule VE à cet instant t. Dans ce cas, le calculateur CAL sélectionne pour chaque instant t la trajectoire çt de fréquence dans le support $\Omega$ des valeurs $\{f^1, \dots, f^{Ls}\}$ de fréquence. On a donc dans ce cas la trajectoire $\xi_t$ de fréquence, qui est égale à $\hat{f} = argmax \, p_{\xi|Z}$. Le calculateur comporte un estimateur du maximum a posteriori maximisant $p_{\xi|Z}(f_1, \dots, f_{N_s})$. La résolution de ce problème d'optimisation peut être facilement effectuée par exemple en utilisant la programmation dynamique.

Suivant un mode de réalisation de l'invention, à la troisième sous-étape E53 de la cinquième étape E5, le calculateur CAL calcule la loi a posteriori $p_{\xi|Z}$ d'observation par convolution (par exemple bidimensionnelle) de la probabilité $p_{Z_t|\xi_t}$ d'observation par des noyaux Gaussiens de la probabilité de transition $p_\xi$.

Suivant un mode de réalisation de l'invention, à la troisième sous-étape E53 de la cinquième étape E5, le calculateur CAL calcule récursivement la loi a posteriori $p_{\xi_t|Z_1 \dots Z_t}$ selon l'équation suivante :

$$p_{\xi_t|Z_1, \dots Z_t} \propto (p_{\xi_t|Z_1, \dots Z_{t-1}} * N) p_{Z_t|\xi_t}$$

Où * est l'opérateur de convolution et N est un noyau gaussien représentant la densité $p_{\xi_t|\xi_{t-1}}$. Ces opérations ne sont pas coûteuses.

Il estime ensuite pour chaque instant t la trajectoire çt de fréquence ou la fréquence $\xi_t$ comme étant un barycentre de la loi a posteriori $p_{\xi_t|Z_1, \dots Z_t}$, qui est prise en respectivement les valeurs $f^1, \dots, f^{Ls}$ de fréquence du support $\Omega$ et qui est affectée respectivement de ces valeurs $f^1, \dots, f^{Ls}$ de fréquence. La fréquence çt , ainsi obtenue, est dans ce cas une combinaison linéaire des valeurs $f^1, ..., f^{Ls}$ de fréquence du support $\Omega$, dont les poids sont formés par la loi a posteriori $p_{\xi|Z}$, prise en respectivement les valeurs $f^1, ..., f^{Ls}$ de fréquence du support $\Omega$. On a donc dans ce cas la trajectoire $\xi_t$ de fréquence de vitesse v de déplacement du véhicule VE, qui est égale à

$$\hat{f}_t = \sum_{f \in \Omega} f \cdot p_{\xi = f | z_1, ..., z_t}$$

La trajectoire $\xi_t$ de fréquence est ainsi une sorte de moyenne a posteriori, qui génère des résultats plus lisses.

Au cours d'une sixième étape E6 postérieure à la cinquième étape E5, le calculateur CAL estime la vitesse v de déplacement de la roue RO du véhicule VE pour les instants t successifs à partir de la trajectoire $\xi_t$ de fréquence. La vitesse v de déplacement de la roue RO du véhicule VE peut être fournie par le calculateur CAL sur l'interface physique INT2 de sortie de données, par exemple en étant affichée sur un écran. Dans le cas d'un dispositif de navigation, la vitesse v de déplacement de la roue RO du véhicule VE peut être stockée dans la mémoire MEM ou dans une autre mémoire et être évaluée en temps réel dans un autre filtre pour une navigation en temps réel.

Suivant un mode de réalisation de l'invention, à la sixième étape E6, le calculateur CAL estime la vitesse v de déplacement de la roue RO du véhicule VE pour l'instant t en multipliant la trajectoire $\xi_t$ de fréquence de vitesse v de déplacement du véhicule VE par le périmètre $2\pi R$ de la roue RO, où R est le rayon de la roue RO et est prédéterminé ou estimé, par exemple au cours de la navigation par un procédé quelconque. La vitesse v est également notée $\hat{v}$ et est dans ce cas une vitesse tangentielle. On a donc $\hat{v} = 2\pi R \xi_t$ ou $\hat{v} = 2\pi R \hat{f}$. Le rayon R et/ou le diamètre de la roue RO et/ou le périmètre 2nR de la roue RO peut avoir été entré par l'utilisateur sur l'interface physique INT1 d'entrée de données ou avoir été préenregistré dans le calculateur CAL.

Suivant un autre mode de réalisation de l'invention, à la sixième étape E6, le calculateur CAL estime la vitesse v de déplacement de la roue RO du véhicule VE pour l'instant t comme étant la fréquence de rotation de la roue RO du véhicule VE (nombre de tours par secondes), égale à la trajectoire $\xi_t$ de fréquence à l'instant t.

L'invention présente notamment les avantages suivants :

- Suppression d'un capteur, plus besoin d'un odomètre. Cela est très intéressant, surtout en aéronautique où les capteurs sont très chers non seulement pour leur résistance à un environnement extrême (forte pression et température) mais aussi pour une raison logistique où le moindre capteur change les propriétés modales de la structure.

- Une estimation précise de la vitesse instantanée v en utilisant l'information présente dans une multitude d'harmoniques linéairement liés, permettant d'estimer les variations fines de cette vitesse au lieu d'une estimation grossière.

- Le problème d'interception de fréquences ou de régimes (communément présente dans les moteurs d"aéronef) est également considéré, ainsi que la continuité de cette variation.

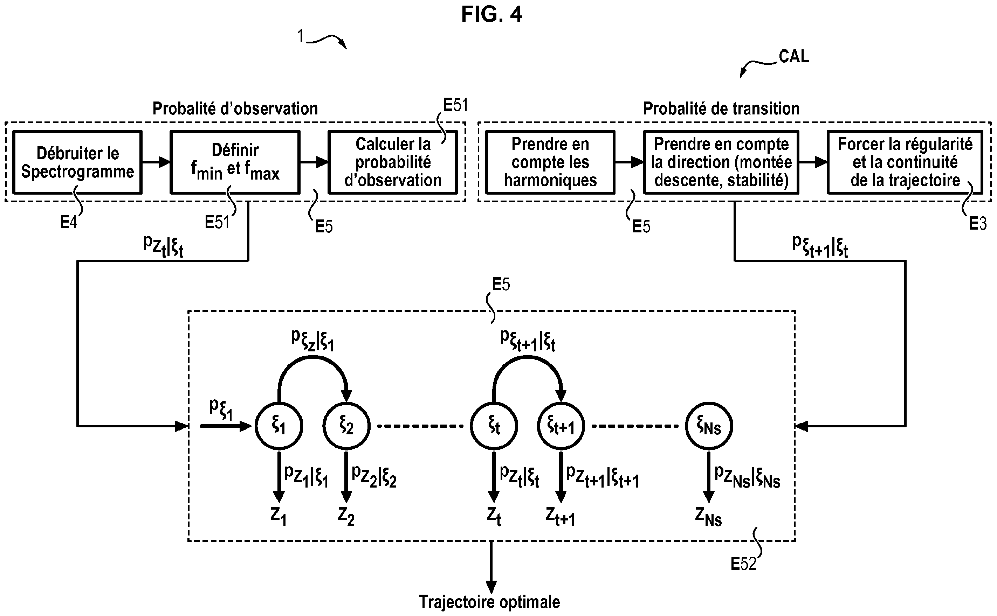

- La méthode offre la possibilité d'améliorer de plus en plus la précision de l'estimation en permettant à l'utilisateur de donner des a priori sur la vitesse (par exemple si on est en montée de régime ou en régime quasi-stationnaire, selon la figure 4). Bien que ces informations ne soient pas obligatoires, elles peuvent améliorer significativement la qualité du signal obtenu.

Bien entendu, les modes de réalisation, caractéristiques, possibilités et exemples décrits ci-dessus peuvent être combinés l'un avec l'autre ou être sélectionnés indépendamment l'un de l'autre.

**Revendications**

1. Procédé d'estimation d'une vitesse (v) de déplacement d'un véhicule (VE) ayant au moins une roue (RO) de roulement sur le sol, **caractérisé en ce que** on mesure (E1) un signal inertiel ou vibratoire à partir d'au moins un capteur (CAP) inertiel ou vibratoire du véhicule, on calcule (E2) par au moins un calculateur (CAL) une pluralité de spectres (SP$_t$) du signal sur une pluralité de fenêtres temporelles (W$_t$) successives définies par rapport à des instants (t) successifs, la pluralité des spectres (SP$_t$) formant au moins un spectrogramme (SP) en fonction des instants (t) successifs, on filtre (E4) le spectrogramme (SP) par au moins un filtre (FIL) d'atténuation de bruit et/ou d'extraction de caractéristiques déterministes, pour obtenir au moins un spectrogramme (S(f$_t$, t)) filtré du signal sur les instants (t) successifs, on estime (E5) par le calculateur (CAL) une trajectoire ($\xi_t$) de fréquence, représentative de la vitesse (v) de la roue (RO) du véhicule (VE) dans le spectrogramme (S(f$_t$, t)) filtré sur les instants (t) successifs, par le fait que :

on estime (E51) par le calculateur (CAL) une probabilité ($p_{Z_t|\xi_t}$) d'observation de la trajectoire ($\xi_t$) de fréquence à partir d'une amplitude calculée du spectrogramme (S(f$_t$, t)) filtré pour chaque instant (t), on estime (E52) par le calculateur (CAL) une loi a posteriori ($p_{\xi|Z}$) d'observation de la trajectoire ($\xi_t$) de fréquence comme étant proportionnelle au produit d'une probabilité de transition prescrite ($p_\xi$) de la trajectoire ($\xi_t$) de fréquence et de la probabilité ($p_{Z_t|\xi_t}$) d'observation de la trajectoire ($\xi_t$) de fréquence, on estime (E53) par le calculateur (CAL) la trajectoire ($\xi_t$) de fréquence pour les instants (t) successifs à partir de la loi a posteriori ($p_{\xi|Z}$) d'observation de la trajectoire ($\xi_t$) de fréquence,

on estime (E6) par le calculateur (CAL) la vitesse (v) de déplacement de la roue du véhicule pour les instants (t) successifs à partir de la trajectoire ($\xi_t$) de fréquence, ayant été estimée.

2. Procédé suivant la revendication 1, **caractérisé en ce que** l'on détermine (E2) par le calculateur (CAL) un support ($\Omega$) de valeurs ($\{f^1, \ldots, f^{Ls}\}$) de fréquence, on estime (E53) par le calculateur (CAL) la trajectoire ($\xi_t$) de fréquence comme étant pour chaque instant (t) dans le support ($\Omega$) la valeur ($f^1, \ldots, f^{Ls}$) de fréquence, qui maximise la loi a posteriori ($p_{\xi|Z}$) d'observation de la trajectoire ($\xi_t$) de fréquence jusqu'à cet instant (t).

3. Procédé suivant la revendication 1, **caractérisé en ce que** l'on détermine (E2) par le calculateur (CAL) un support ($\Omega$) de valeurs ($\{f^1, \ldots, f^{Ls}\}$) de fréquence, on estime (E53) pour chaque instant (t) par le calculateur (CAL) la fréquence ($\xi_t$) comme étant un barycentre de la loi a posteriori ($p_{\xi_t|Z}$) d'observation de la fréquence ($\xi_t$), prise en les valeurs ($f^1, \ldots, f^{Ls}$) de fréquence du support ($\Omega$) et affectée de ces valeurs ($f^1, \ldots, f^{Ls}$) de fréquence.

4. Procédé suivant l'une quelconque des revendications précédentes, **caractérisé en ce que** l'on détermine (E2) par le calculateur (CAL) un support $\Omega$ de valeurs ($\{f^1, \ldots, f^{Ls}\}$) de fréquence,

l'on estime (E51) par le calculateur (CAL) la probabilité ($p_{Z_t|\xi_t}$) d'observation sachant une trajectoire comme dépendant de l'amplitude calculée du spectrogramme (S(f$_t$, t)) filtré et normalisé pour chaque instant (t).

5. Procédé suivant la revendication 4, **caractérisé en ce que** l'on estime (E51) par le calculateur (CAL) la probabilité $p_{Z_t|\xi_t}$ d'observation selon l'équation suivante :

$$p_{Z_t|\xi_t=f_t}(z_t) = |S(f_t, t)| . 1_{[f_{min}(t), f_{max}(t)]}(f_t)$$

où $|S(f_t, t)|$ est l'amplitude calculée du spectrogramme $S(f_t, t)$ filtré pour chaque instant t, $f_{min}(t)$ est une trajectoire minimale de fréquence ayant été mesurée, $f_{max}(t)$ est une trajectoire maximale de fréquence ayant été mesurée, $f_{min}(t)$ et $f_{max}(t)$ sont telles que $f_{min}(t) \leq \xi_t \leq f_{max}(t)$, $1_{[f_{min}(t), f_{max}(t)]}(f_t)$ est une fonction prenant la valeur 1 pour $f_t$ entre $f_{min}(t)$ et $f_{max}(t)$ et prenant la valeur 0 pour $f_t$ en-dessous de $f_{min}(t)$ ou au-dessus de $f_{max}(t)$.

6. Procédé suivant la revendication 4, **caractérisé en ce que** l'on estime (E51) par le calculateur (CAL) la probabilité $p_{Z_t|\xi_t}$ d'observation selon l'équation suivante :

$$p_{Z_t|\xi_t=f_t}(z_t) = \prod_{j| \, j.f_t < \frac{F_s}{2}} \frac{1}{c_t} |S(j.f_t, t)| \, 1_{[f_{min}(t), f_{max}(t)]}(f_t)$$

où $y$ est un entier ou réel positif, vérifiant $j.f_t < \frac{F_s}{2}$ où f$_t$ désigne les fréquences de chaque spectrogramme filtré S(f$_t$, t) à l'instant t, et où $F_s$ est une fréquence de seuil, ayant été prédéterminée en fonction du spectrogramme filtré S(f$_t$, t).

7. Procédé suivant l'une quelconque des revendications précédentes, **caractérisé en ce que** l'on détermine (E2) par le calculateur (CAL) un support $\Omega$ de valeurs ($\{f^1, \ldots, f^{Ls}\}$) de fréquence,

on prescrit (E3) par le calculateur (CAL) la probabilité $p_\xi(f_1, \ldots, f_{N_s})$ de transition de la trajectoire $\xi_t$ de fréquence pour l'instant $N_s$ en partant d'une probabilité initiale donnée $p_{\xi_1}$ de l'instant 1, pour $t \in \{1, \ldots, N_s\}$ et pour chaque fréquence $f_t \in \Omega$ selon l'équation suivante :

$$p_\xi(f_1, \ldots, f_{N_s}) = p_{\xi_1}(f_1) \prod_{t=1}^{N_s-1} p_{\xi_{t+1}|\xi_t=f_t}(f_{t+1})$$

où $N_s$ est un nombre entier prescrit, supérieur ou égal à deux, d'instants prescrits successifs t,

où $p_{\xi_{t+1}|\xi_t=f_t}(f_{t+1})$ est la probabilité de transition de la fréquence çt de la trajectoire de l'instant présent t à la fréquence $\xi_{t+1}$ de la trajectoire de fréquence de l'instant suivant t+1.

8. Procédé suivant la revendication 7, **caractérisé en ce que** la probabilité $p_{\xi_{t+1}|\xi_t=f_t}(f_{t+1})$ de transition de la fréquence $\xi_t$

de la trajectoire de fréquence de l'instant présent t à la fréquence $\xi_{t+1}$ de la trajectoire de fréquence de l'instant suivant t+1 suit une loi conditionnelle gaussienne centrée sur la fréquence $f_t$ du spectrogramme filtré (S($f_t$, t)) à l'instant t.

9. Procédé la revendication 8, **caractérisé en ce que** la loi conditionnelle gaussienne centrée sur la fréquence $f_t$ a un écart-type $\sigma_t = \Delta t.\gamma_t$ où $\Delta t$ est une résolution temporelle calculée du spectrogramme de l'instant t, $\gamma_t$ est une vitesse moyenne calculée avec laquelle la trajectoire $\xi_t$ de fréquence évolue entre l'instant t et l'instant suivant t+1.

10. Procédé suivant l'une quelconque des revendications précédentes, **caractérisé en ce que** l'on estime (E6) par le calculateur (CAL) la vitesse (v) de déplacement de la roue du véhicule en multipliant la trajectoire ($\xi_t$) de fréquence par 2nR, où R est le rayon de la roue (RO) et est prédéterminé ou estimé.

11. Procédé suivant l'une quelconque des revendications 8 à 10, **caractérisé en ce que** le filtre (FIL) d'atténuation de bruit et/ou d'extraction de caractéristiques déterministes comprend un filtre médian glissant et/ou un filtre de séparation de caractéristiques déterministes par rapport à des caractéristiques aléatoires.

12. Dispositif (1) d'estimation d'une vitesse (v) de déplacement d'un véhicule (VE) ayant au moins une roue (RO) de roulement sur le sol, **caractérisé en ce que** le dispositif comporte :

   un capteur (CAP) inertiel ou vibratoire du véhicule pour mesurer (E1) un signal inertiel ou vibratoire,
   un calculateur (CAL) configuré pour calculer (E2) une pluralité de spectres ($SP_t$) du signal sur une pluralité de fenêtres temporelles ($W_t$) successives définies par rapport à des instants (t) successifs, la pluralité des spectres ($SP_t$) formant au moins un spectrogramme (SP) en fonction des instants (t) successifs, un filtre (FIL) d'atténuation de bruit et/ou d'extraction de caractéristiques déterministes dans le spectrogramme (SP), pour obtenir (E4) au moins un spectrogramme (S($f_t$, t)) filtré du signal sur les instants (t) successifs,
   le calculateur (CAL) étant configuré pour estimer (E5) une trajectoire ($\xi_t$) de fréquence, représentative de la vitesse (v) de la roue (RO) du véhicule (VE) dans le spectrogramme (S($f_t$, t)) filtré sur les instants (t) successifs, par: estimation (E51), par le calculateur (CAL), d'une probabilité ($p_{Zt|\xi_t}$) d'observation de la trajectoire ($\xi_t$) de fréquence à partir d'une amplitude calculée du spectrogramme (S($f_t$, t)) filtré pour chaque instant (t), estimation (E52), par le calculateur (CAL), d'une loi a posteriori ($p_{\xi|Z}$) d'observation de la trajectoire ($\xi_t$) de fréquence comme étant proportionnelle au produit d'une probabilité de transition prescrite ($p_{\xi}$) de la trajectoire ($\xi_t$) de fréquence et de la probabilité ($p_{Zt|\xi_t}$) d'observation de la trajectoire ($\xi_t$) de fréquence, estimation (E53), par le calculateur (CAL), de la trajectoire ($\xi_t$) de fréquence pour les instants (t) successifs à partir de la loi a posteriori ($p_{\xi|Z}$) d'observation de la trajectoire ($\xi_t$) de fréquence,
   le calculateur (CAL) étant configuré pour estimer (E6) la vitesse (v) de déplacement de la roue du véhicule pour les instants (t) successifs à partir de la trajectoire ($\xi_t$) de fréquence.

13. Programme d'ordinateur, comportant des instructions de code pour la mise en oeuvre du procédé d'estimation de la vitesse (v) de déplacement du véhicule suivant l'une quelconque des revendications 1 à 11, lorsqu'il est exécuté dans un calculateur (CAL).

**Patentansprüche**

1. Verfahren zur Schätzung einer Fahrgeschwindigkeit (v) eines Fahrzeugs (VE) mit mindestens einem Laufrad (RO) auf dem Boden, **dadurch gekennzeichnet, dass** ein Trägheits- oder Vibrationssignal ausgehend von mindestens einem Trägheits- oder Vibrationssensor (CAP) des Fahrzeugs gemessen (E1) wird,

   durch mindestens einen Rechner (CAL) eine Vielzahl von Spektren ($SP_t$) des Signals über eine Vielzahl von aufeinanderfolgenden Zeitfenstern ($W_t$), die in Bezug auf aufeinanderfolgende Zeitpunkte (t) definiert sind, berechnet (E2) wird, wobei die Vielzahl der Spektren ($SP_t$) mindestens ein Spektrogramm (SP) in Abhängigkeit von den aufeinanderfolgenden Zeitpunkten (t) bildet,
   das Spektrogramm (SP) durch mindestens einen Filter (FIL) zur Rauschunterdrückung und/oder zur Extraktion deterministischer Merkmale gefiltert (E4) wird, um mindestens ein gefiltertes Spektrogramm (S($f_t$, t)) des Signals über die aufeinanderfolgenden Zeitpunkte (t) zu erhalten,
   durch den Rechner (CAL) eine Frequenztrajektorie ($\xi_t$) geschätzt (E5) wird, die für die Geschwindigkeit (v) des Rades (RO) des Fahrzeugs (VE) in dem gefilterten Spektrogramm (S($f_t$, t)) über die aufeinanderfolgenden Zeitpunkte (t) repräsentativ ist, dadurch dass:

durch den Rechner (CAL) eine Wahrscheinlichkeit ($p_{z_t|\xi_t}$) der Beobachtung der Frequenztrajektorie ($\xi_t$) ausgehend von einer berechneten Amplitude des gefilterten Spektrogramms (S($f_t$, t)) für jeden Zeitpunkt (t) geschätzt (E51) wird,

durch den Rechner (CAL) eine a posteriori-Gesetzmäßigkeit ($p_{\xi|z}$) der Beobachtung der Frequenztrajektorie ($\xi_t$) als proportional zum Produkt aus einer vorgeschriebenen Wahrscheinlichkeit ($p_\xi$) der Transition der Frequenztrajektorie ($\xi_t$) und der Wahrscheinlichkeit ($p_{z_t|\xi_t}$) der Beobachtung der Frequenztrajektorie ($\xi_t$) geschätzt (E52) wird,

durch den Rechner (CAL) die Frequenztrajektorie ($\xi_t$) für die aufeinanderfolgenden Zeitpunkte (t) ausgehend von der a posteriori-Gesetzmäßigkeit ($p_{\xi|z}$) der Beobachtung der Frequenztrajektorie ($\xi_t$) geschätzt (E53) wird,

durch den Rechner (CAL) die Fahrgeschwindigkeit (v) des Rades des Fahrzeugs für die aufeinanderfolgenden Zeitpunkte (t) ausgehend von der Frequenztrajektorie ($\xi_t$) geschätzt (E6) wird, die geschätzt wurde.

2. Verfahren nach Anspruch 1, **dadurch gekennzeichnet, dass** durch den Rechner (CAL) ein Träger ($\Omega$) von Frequenzwerten ($\{f^1,... , f^{Ls}\}$) bestimmt (E2) wird, durch den Rechner (CAL) die Frequenztrajektorie ($\xi_t$) als der für jeden Zeitpunkt (t) im Träger ($\Omega$) präsente Frequenzwert ($f^1$, ... , $f^{Ls}$) geschätzt (E53) wird, der die a posteriori-Gesetzmäßigkeit ($p_{\xi|z}$) der Beobachtung der Frequenztrajektorie ($\xi_t$) bis zu diesem Zeitpunkt (t) maximiert.

3. Verfahren nach Anspruch 1, **dadurch gekennzeichnet, dass** durch den Rechner (CAL) ein Träger ($\Omega$) von Frequenzwerten ($\{f^1, ... , f^{Ls}\}$) bestimmt (E2) wird, für jeden Zeitpunkt (t) durch den Rechner (CAL) die Frequenztrajektorie ($\xi_t$) als ein Schwerpunkt der a posteriori-Gesetzmäßigkeit ($p_{\xi_t|z}$) der Beobachtung der Frequenztrajektorie ($\xi_t$) geschätzt (E53) wird, die in den Frequenzwerten ($f^1$, ... , $f^{Ls}$) des Trägers ($\Omega$) genommen wird und mit diesen Frequenzwerten ($f^1$, ... , $f^{Ls}$) belegt ist.

4. Verfahren nach einem beliebigen der vorhergehenden Ansprüche, **dadurch gekennzeichnet, dass** durch den Rechner (CAL) einen Träger $\Omega$ von Frequenzwerten ($\{f^1, ... , f^{Ls}\}$) bestimmt (E2) wird, durch den Rechner (CAL) die Beobachtungswahrscheinlichkeit ($p_{z_t|\xi_t}$) geschätzt (E51) wird, die eine Trajektorie als abhängig von der berechneten Amplitude des gefilterten und normalisierten Spektrogramms (S($f_t$, t)) für jeden Zeitpunkt (t) kennt.

5. Verfahren nach Anspruch 4, **dadurch gekennzeichnet, dass** durch den Rechner (CAL) die Beobachtungswahrscheinlichkeit $p_{z_t|\xi_t}$ gemäß der folgenden Gleichung geschätzt (E51) wird:

$$p_{z_t|\xi_t=f_t}(z_t) = \left|S(f_t, t)\right|.1_{[f_{min}(t),f_{max}(t)]}(f_t)$$

wobei $|S(f_t, t)|$ die berechnete Amplitude des gefilterten Spektrogramms $S(f_t, t)$ für jeden Zeitpunkt t ist,
$f_{min}(t)$ eine minimale Frequenztrajektorie ist, die gemessen wurde,
$f_{max}(t)$ eine maximale Frequenztrajektorie ist, die gemessen wurde,
$f_{min}(t)$ und $f_{max}(t)$ derart sind, dass $f_{min}(t) :5 \xi_t \leq f_{max}(t)$,
$1_{[f_{min}(t),f_{max}(t)]}(f_t)$ eine Funktion ist, die den Wert 1 für $f_t$ zwischen $f_{min}(t)$ und $f_{max}(t)$ annimmt und den Wert 0 für $f_t$ unterhalb von $f_{min}(t)$ oder oberhalb von $f_{max}(t)$ annimmt.

6. Verfahren nach Anspruch 4, **dadurch gekennzeichnet, dass** die Beobachtungswahrscheinlichkeit $p_{z_t|\xi_t}$ durch den Rechner (CAL) gemäß der folgenden Gleichung geschätzt (E51) wird:

$$p_{z_t|\xi_t=f_t}(z_t) = \prod_{j\left|j.f_t<\frac{F_s}{2}\right.}\frac{1}{c_t}|S(j.f_t, t)|1_{[f_{min}(t),f_{max}(t)]}(f_t)$$

wobei j eine positive Ganzzahl oder eine positive reelle Zahl ist, die $j.f_t < \dfrac{F_s}{2}$ erfüllt,
wobei $f_t$ die Frequenzen jedes gefilterten Spektrogramms S($f_t$, t) zum Zeitpunkt t bezeichnet, und
wobei $F_s$ eine Schwellenfrequenz ist, die in Abhängigkeit von dem gefilterten Spektrogramm S($f_t$, t) vorbestimmt wurde.

7. Verfahren nach einem beliebigen der vorhergehenden Ansprüche, **dadurch gekennzeichnet, dass** durch den Rechner (CAL) ein Träger $\Omega$ von Frequenzwerten ($\{f^1, ..., f^{L-s}\}$) bestimmt (E2) wird,

durch den Rechner (CAL) die Wahrscheinlichkeit $p_\xi(f_1, ..., f_{N_s})$ der Transition der Frequenztrajektorie $\xi_t$ für den Zeitpunkt $N_s$ ausgehend von einer gegebenen Anfangswahrscheinlichkeit $p_{\xi_1}$ zum Zeitpunkt 1 für t E $\{1, ..., N_S\}$ und für jede Frequenz $f_t$ E $\Omega$ vorgeschrieben (E3) wird gemäß der folgenden Gleichung:

$$p_\xi\big(f_1, ..., f_{N_s}\big) = p_{\xi_1}(f_1) \prod_{t=1}^{N_s-1} p_{\xi_{t+1}|\xi_t=f_t}(f_{t+1})$$

wobei $N_s$ eine vorgeschriebene Ganzzahl, die größer oder gleich zwei ist, von aufeinanderfolgender vorgeschriebener Zeitpunkte t ist,

wobei $p_{\xi_{t+1}|\xi_t=f_t}(f_{t+1})$ die Wahrscheinlichkeit der Transition der Frequenz $\xi_t$ der Trajektorie zum aktuellen Zeitpunkt t zur Frequenz $\xi_{t+1}$ der Frequenztrajektorie des nächsten Zeitpunkts t+1 ist.

8. Verfahren nach Anspruch 7, **dadurch gekennzeichnet, dass** die Wahrscheinlichkeit $p_{\xi_{t+1}|\xi_t=f_t}(f_{t+1})$ der Transition der Frequenz $\xi_t$ der Frequenztrajektorie zum aktuellen Zeitpunkt t zur Frequenz $\xi_{t+1}$ der Frequenztrajektorie des nächsten Zeitpunkts t+1 einer bedingten Gaußschen Gesetzmäßigkeit folgt, die auf der Frequenz $f_t$ des gefilterten Spektrogramms (S($f_t$, t)) zum Zeitpunkt t zentriert ist.

9. Verfahren nach Anspruch 8, **dadurch gekennzeichnet, dass** die auf der Frequenz $f_t$ zentrierte bedingte Gaußsche Gesetzmäßigkeit eine Standardabweichung $\sigma_t = \Delta t.\gamma_t$ hat, wobei $\Delta t$ eine berechnete zeitliche Auflösung des Spektrogramms zum Zeitpunkt t ist, $\gamma_t$ eine berechnete Durchschnittsgeschwindigkeit ist, mit der sich die Frequenztrajektorie $\xi_t$ zwischen dem Zeitpunkt t und dem nächsten Zeitpunkt t+1 ändert.

10. Verfahren nach einem beliebigen der vorhergehenden Ansprüche, **dadurch gekennzeichnet, dass** durch den Rechner (CAL) die Fahrgeschwindigkeit (v) des Rades des Fahrzeugs durch Multiplikation der Frequenztrajektorie ($\xi_t$) mit 2nR geschätzt (E6) wird, wobei R der Radius des Rades (RO) ist und vorbestimmt ist oder geschätzt wird.

11. Verfahren nach einem beliebigen der Ansprüche 8 bis 10, **dadurch gekennzeichnet, dass** der Filter (FIL) zur Rauschunterdrückung und/oder zur Extraktion deterministischer Merkmale einen gleitenden Medianfilter und/oder einen Filter zur Trennung deterministischer Merkmale von zufälligen Merkmalen umfasst.

12. Vorrichtung (1) zur Schätzung einer Fahrgeschwindigkeit (v) eines Fahrzeugs (VE), das mindestens ein Laufrad (RO) auf dem Boden hat, **dadurch gekennzeichnet, dass** die Vorrichtung umfasst:

einen Trägheits- oder Vibrationssensor (CAP) des Fahrzeugs zum Messen (E1) eines Trägheits- oder Vibrationssignals,
einen Rechner (CAL), der ausgelegt ist, um eine Vielzahl von Spektren (SP$_t$) des Signals über eine Vielzahl von aufeinanderfolgenden Zeitfenstern (W$_t$) zu berechnen (E2), die in Bezug auf aufeinanderfolgende Zeitpunkte (t) definiert sind, wobei die Vielzahl der Spektren (SP$_t$) mindestens ein Spektrogramm (SP) in Abhängigkeit von den aufeinanderfolgenden Zeitpunkten (t) bildet,
einen Filter (FIL) zur Rauschunterdrückung und/oder zur Extraktion deterministischer Merkmale im Spektrogramm (SP), um mindestens ein gefiltertes Spektrogramm (S($f_t$, t)) des Signals über die aufeinanderfolgenden Zeitpunkte (t) zu erhalten (E4), wobei der Rechner (CAL) ausgelegt ist, um eine Frequenztrajektorie ($\xi_t$) zu schätzen (E5), die für die Geschwindigkeit (v) des Rades (RO) des Fahrzeugs (VE) in dem gefilterten Spektrogramm (S($f_t$, t)) über die aufeinanderfolgenden Zeitpunkte (t) repräsentativ ist, durch:

Schätzen (E51), durch den Rechner (CAL), einer Wahrscheinlichkeit ($p_{z_t|\xi_t}$) der Beobachtung der Frequenztrajektorie ($\xi_t$) ausgehend von einer berechneten Amplitude des gefilterten Spektrogramms (S($f_t$, t)) für jeden Zeitpunkt (t),
Schätzen (E52), durch den Rechner (CAL), einer a posteriori-Gesetzmäßigkeit ($p_{\xi|z}$) der Beobachtung der Frequenztrajektorie ($\xi_t$) als proportional zum Produkt aus einer vorgeschriebenen Wahrscheinlichkeit ($p_\xi$) der Transition der Frequenztrajektorie ($\xi_t$) und der Wahrscheinlichkeit ($p_{z_t|\xi_t}$) der Beobachtung der Frequenztrajektorie ($\xi_t$),
Schätzen (E53), durch den Rechner (CAL), der Frequenztrajektorie ($\xi_t$) für die aufeinanderfolgenden Zeitpunkte (t) ausgehend von der a posteriori-Gesetzmäßigkeit ($p_{\xi|z}$) der Beobachtung der Frequenztra-

jektorie ($\xi_t$),
wobei der Rechner (CAL) konfiguriert ist, um die Fahrgeschwindigkeit (v) des Rades des Fahrzeugs für die aufeinanderfolgenden Zeitpunkte (t) ausgehend von der der Frequenztrajektorie ($\xi_t$) zu schätzen (E6).

13. Computerprogramm, das Codeanweisungen zur Durchführung des Verfahrens zum Schätzen der Fahrgeschwindigkeit (v) des Fahrzeugs nach einem der Ansprüche 1 bis 11 aufweist, wenn es in einem Rechner (CAL) ausgeführt wird.

**Claims**

1. A method for estimating a travel speed (v) of a vehicle (VE) having at least one wheel (RO) for rolling on the ground, **characterized by**:

   - measuring (E1) an inertial or vibratory signal by at least one inertial or vibratory sensor (CAP) of the vehicle,
   - calculating (E2) by at least one calculator (CAL) a plurality of spectra ($SP_t$) of the signal over a plurality of successive time windows ($W_t$) defined with respect to successive instants (t), the plurality of spectra ($SP_t$) forming at least one spectrogram (SP) as a function of the successive instants (t),
   - filtering (E4) the spectrogram (SP) by at least one noise attenuation and/or deterministic feature extraction filter (FIL), to obtain at least one filtered spectrogram ($S(f_t, t)$) of the signal on the successive instants (t),
   - estimating (E5) by the calculator (CAL) a frequency trajectory ($\xi_t$) representative of the speed (v) of the wheel (RO) of the vehicle (VE) in the filtered spectrogram ($S(f_t, t)$) on the successive instants (t), by:

      estimating (E51) by the calculator (CAL) a probability ($p_{z_t|\xi_t}$) of observation of the frequency trajectory ($\xi_t$) from a calculated amplitude of the filtered spectrogram (S(ft,t)) for each instant (t),
      estimating (E52) by the calculator (CAL) an a posteriori law ($p_{\xi|Z}$) of observation of the frequency trajectory ($\xi_t$) as being proportional to the product of a prescribed probability ($p_\xi$) of transition of the frequency trajectory ($\xi_t$) and of the probability ($p_{Z_t|\xi_t}$) of observation of the frequency trajectory ($\xi_t$),
      estimating (E53) by the calculator (CAL) the frequency trajectory ($\xi_t$) for the successive instants (t) from the a posteriori law ($p_{\xi|Z}$) of observation of the frequency trajectory ($\xi_t$),
      estimating (E6) by the calculator (CAL) the travel speed (v) of the wheel of the vehicle for the successive instants (t) from the frequency trajectory ($\xi_t$), that has been estimated.

2. The method according to claim 1, **characterized by** determining (E2) by the calculator (CAL) a support ($\Omega$) of frequency values ($\{f^1, ... , f^{L-s}\}$), estimating (E53) by the calculator (CAL) the frequency trajectory ($\xi_t$) as being for each instant (t) in the support ($\Omega$) the frequency value ($f^1, ... , f^{L-s}$) that maximizes the a posteriori law ($p_{\xi|Z}$) of observation of the frequency trajectory ($\xi_t$) until this instant (t).

3. The method according to claim 1, **characterized by** determining (E2) by the calculator (CAL) a support ($\Omega$) of frequency values ($\{f^1, ... , f^{L-s}\}$), estimating (E53) by the calculator (CAL) the frequency ($\xi_t$) for each instant (t) as being a barycenter of the a posteriori law ($p_{\xi t|Z}$) of observation of the frequency ((t), taken at the frequency values ($f^1, ... , f^{L-s}$) of the support ($\Omega$) and subjected to these frequency values ($f^1, ... , f^{L-s}$).

4. The method according to any one of the preceding claims, **characterized by** determining (E2) by the calculator (CAL) a support $\Omega$ of frequency values ($\{f^1, ... , f^{L-s}\}$), estimating (E51) by the calculator (CAL) the probability ($p_{Z_t|\xi_t}$) of observation knowing a trajectory as dependent on the calculated amplitude of the filtered and normalized spectrogram ($S(f_t, t)$) for each instant (t).

5. The method according to claim 4, **characterized by** estimating (E51) by the calculator (CAL) the probability $p_{Z_t|\xi_t}$ of observation is according to the following equation:

$$p_{Z_t|\xi_t=f_t}(z_t) = |S(f_t, t)| . 1_{[f_{min}(t), f_{max}(t)]}(f_t)$$

where $|S(f_t, t)|$ is the calculated amplitude of the spectrogram $S(f_t, t)$ filtered for each instant t,
$f_{min}(t)$ is a minimum frequency trajectory that has been measured,
$f_{max}(t)$ is a maximum frequency trajectory that has been measured,
$f_{min}(t)$ and $f_{max}(t)$ are such that $f_{min}(t) \le \xi_t \le f_{max}(t)$,

$1_{[f_{min}(t),f_{max}(t)]}(f_t)$ is a function taking the value 1 for $f_t$ between $f_{min}(t)$ and $f_{max}(t)$ and taking the value 0 for $f_t$ below $f_{min}(t)$ or above $f_{max}(t)$.

6. The method according to claim 4, **characterized by** estimating (E51) by the calculator (CAL) the probability $p_{z_t|\xi_t}$ of observation according to the following equation:

$$p_{z_t|\xi_t=f_t}(z_t) = \prod_{j|\; j.f_t<\frac{F_s}{2}} \frac{1}{c_t} |S(j.f_t,t)|\, 1_{[f_{min}(t),f_{max}(t)]}(f_t)$$

where $j$ is a positive integer or real number, satisfying $j.f_t < \frac{F_s}{2}$

where $f_t$ denotes the frequencies of each filtered spectrogram $S(f_t, t)$ at the instant t,
and where $F_s$ is a threshold frequency that has been predetermined as a function of the filtered spectrogram $S(f_t, t)$.

7. The method according to any one of the preceding claims, **characterized by** determining (E2) by the calculator (CAL) a support $\Omega$ of frequency values ($\{f^1, \ldots, f^{L_s}\}$),

prescribing (E3) by the calculator (CAL) the probability $p_\xi(f_1, \ldots, f_{N_s})$ of transition of the frequency trajectory $\xi_t$ for the instant $N_s$ starting from a given initial probability $p_{\xi_1}$ of the instant 1, for $t \in \{1, \ldots, N_s\}$ and for each frequency $f_t \in \Omega$ according to the following equation:

$$p_\xi(f_1, \ldots, f_{N_s}) = p_{\xi_1}(f_1) \prod_{t=1}^{N_s-1} p_{\xi_{t+1}|\xi_t=f_t}(f_{t+1})$$

where $N_s$ is a prescribed integer, greater than or equal to two, of successive prescribed instants t,
where $p_{f_{t+1}|\xi_t=f_t}(f_{t+1})$ is the probability of transition from the frequency $\xi_t$ of the trajectory of the present instant t to the frequency $\xi_{t+1}$ of the frequency trajectory of the next instant t+1.

8. The method according to claim 7, **characterized in that** the probability $p_{\xi_{t+1}|\xi_t=f_t}(f_{t+1})$ of transition from the frequency $\xi_t$ of the frequency trajectory of the present instant t to the frequency $\xi_{t+1}$ of the frequency trajectory of the next instant t+1 follows a conditional Gaussian law centered on the frequency $f_t$ of the filtered spectrogram ($S(f_t, t)$) at the instant t.

9. The method according to claim 8, **characterized in that** the conditional Gaussian law centered on the frequency $f_t$ has a standard deviation $\sigma_t = \Delta t.\gamma_t$ where $\Delta t$ is a calculated time resolution of the spectrogram of the instant t, $\gamma_t$ is a calculated average speed with which the frequency trajectory $\xi_t$ evolves between the instant t and the next instant t+1.

10. The method according to any one of the preceding claims, **characterized by** estimating (E6) by the calculator (CAL) the travel speed (v) of the wheel of the vehicle by multiplying the frequency trajectory ($\xi_t$) by $2\pi R$, where R is the radius of the wheel (RO) and is predetermined or estimated.

11. The method according to any one of claims 8 to 10, **characterized in that** the noise attenuation and/or deterministic feature extraction filter (FIL) comprises a sliding median filter and/or a deterministic feature separation filter with respect to random features.

12. A device (1) for estimating a travel speed (v) of a vehicle (VE) having at least one wheel (RO) for rolling on the ground, **characterized in that** the device comprises:

an inertial or vibratory sensor (CAP) of the vehicle for measuring (E1) an inertial or vibratory signal,
a calculator (CAL) configured to calculate (E2) a plurality of spectra ($SP_t$) of the signal over a plurality of successive time windows ($W_t$) defined with respect to successive instants (t), the plurality of spectra ($SP_t$) forming at least one spectrogram (SP) as a function of the successive instants (t),
a filter (FIL) for attenuating noise and/or extracting deterministic features in the spectrogram (SP), to obtain (E4) at least one filtered spectrogram ($S(f_t, t)$) of the signal over the successive instants (t),
the calculator (CAL) being configured to estimate (E5) a frequency trajectory ($\xi_t$), representative of the speed (v) of the wheel (RO) of the vehicle (VE) in the filtered spectrogram ($S(f_t, t)$) over the successive instants (t), by:

estimation (E51), by the calculator (CAL), of a probability ($p_{Zt|\xi_t}$) of observation of the frequency trajectory ($\xi_t$) from a calculated amplitude of the filtered spectrogram ($S(ft,t)$) for each instant (t),
estimation (E52), by the calculator (CAL), of an a posteriori law ($p_{\xi|Z}$) of observation of the frequency trajectory ($\xi_t$) as being proportional to the product of a prescribed probability of transition ($p_\xi$) of the frequency trajectory ($\xi_t$) and of the probability ($p_{Zt|\xi_t}$) of observation of the frequency trajectory ($\xi_t$),
estimation (E53), by the calculator (CAL), of the frequency trajectory ($\xi_t$) for the successive instants (t) from the a posteriori law ($p_{\xi|Z}$) of observation of the frequency trajectory ($\xi_t$),
the calculator (CAL) being configured to estimate (E6) the travel speed (v) of the wheel of the vehicle for the successive instants (t) from the frequency trajectory ($\xi_t$).

13. A computer program, comprising code instructions for the implementation of the method for estimating the travel speed (v) of the vehicle according to any one of claims 1 to 11, when it is executed in a calculator (CAL).

# FIG. 1

```
┌─────────────────────────────────────┐
│                 E1                   │
│           X, CAP, RO, VE             │
└─────────────────────────────────────┘
                    │
                    ▼
┌─────────────────────────────────────┐
│                 E2                   │
│       CAL, SP_t, W, t, N_s, SP, Ω    │
└─────────────────────────────────────┘
                    │
                    ▼
┌─────────────────────────────────────┐
│                 E3                   │
│              p_ξ, N                  │
└─────────────────────────────────────┘
                    │
                    ▼
┌─────────────────────────────────────┐
│                 E4                   │
│             FIL, S(f_t, t)           │
└─────────────────────────────────────┘
                    │
                    ▼
┌─────────────────────────────────────┐
│                 E51                  │
│  Z_t, p_{Z_t|ξ_t}, f_min(t), f_max(t), C_t │
└─────────────────────────────────────┘
                    │
                    ▼
┌─────────────────────────────────────┐
│                 E52                  │
│              p_{ξ|z}                 │
└─────────────────────────────────────┘
                    │
                    ▼
┌─────────────────────────────────────┐
│                 E53                  │
│              ξ_t, f̂                 │
└─────────────────────────────────────┘
                    │
                    ▼
┌─────────────────────────────────────┐
│                 E6                   │
│                 v                    │
└─────────────────────────────────────┘
```

E5 brackets blocks E51, E52, E53.

# FIG. 2

**FIG. 3**

## FIG. 4

**Probalité d'observation**

| Débruiter le Spectrogramme | Définir $f_{min}$ et $f_{max}$ | Calculer la probabilité d'observation |
|---|---|---|

E4      E51      E5     E51

$p_{z_t|\xi_t}$

**Probalité de transition**    CAL

| Prendre en compte les harmoniques | Prendre en compte la direction (montée descente, stabilité) | Forcer la régularité et la continuité de la trajectoire |
|---|---|---|

E5      E3

$p_{\xi_{t+1}|\xi_t}$

E5

$p_{\xi_z|\xi_1}$      $p_{\xi_{t+1}|\xi_t}$

$p_{\xi_1}$

$\xi_1$   $\xi_2$   ----   $\xi_t$   $\xi_{t+1}$   ----   $\xi_{Ns}$

$p_{z_1|\xi_1}$   $p_{z_2|\xi_2}$   $p_{z_t|\xi_t}$   $p_{z_{t+1}|\xi_{t+1}}$   $p_{z_{Ns}|\xi_{Ns}}$

$z_1$   $z_2$   $z_t$   $z_{t+1}$   $z_{Ns}$

E52

**Trajectoire optimale**

EP 4 305 430 B1

## FIG. 5

### Signal brut

$X$

## FIG. 6

### Spectrogramme

SP

Harmonique

Fréquence
des roues

$SP_t$

## FIG. 7

### Spectrogramme débruité

$S(f_t, f)$

## FIG. 8

### Probabilité d'observation

$p_{Z_t|\xi_t}$

## FIG. 9

### Prise en compte des harmoniques

$p_\xi$

## FIG. 10

### Trajectoire estimée

$\xi_t$

EP 4 305 430 B1

## FIG. 11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2019236859 A

- US 2014278206 A

**Littérature non-brevet citée dans la description**

- **DE RICKARD KARLSSON ; FREDRIK GUSTAFS-SON**. *The Future of Automotive Localization Algorithms: Available, reliable, and scalable localization: Anywhere and anytime*, 2017